# EUROPEAN PATENT APPLICATION

(11) **EP 4 797 702 A1**
(43) Date of publication of application: **26.08.2026**
(21) Application number: 24880104.5
(22) Date of filing: 16.10.2024
(51) Int. Cl.: H04N 19/96, H04N 19/70, H04N 19/597, G01S 17/89

(54) **POINT CLOUD DATA ENCODING DEVICE, POINT CLOUD DATA ENCODING METHOD, POINT CLOUD DATA DECODING DEVICE, AND POINT CLOUD DATA DECODING METHOD**

(30) Priority: 16.10.2023 KR 20230137365
(71) Applicant: LG Electronics Inc., Seoul 07336 (KR)
(72) Inventor: HUR, Hyejung, Seoul 06772 (KR)
(74) Representative: Jung, Minkyu
(86) International application number: PCT/KR2024/015659
(87) International publication number: WO 2025/084767

(57) **Abstract**

A decoding method according to embodiments may comprise the steps of: receiving a bitstream including point cloud data; and decoding the point cloud data. An encoding method according to embodiments may comprise the steps of: encoding point cloud data; and transmitting a bitstream including the point cloud data.

## Description

### [Technical Field]

Embodiments relate to a method and device for processing point cloud content.

### [Background Art]

Point cloud content is content represented by a point cloud, which is a set of points belonging to a coordinate system representing a three-dimensional space. The point cloud content may express media configured in three dimensions, and is used to provide various services such as virtual reality (VR), augmented reality (AR), mixed reality (MR), and self-driving services. However, tens of thousands to hundreds of thousands of point data are required to represent point cloud content. Therefore, there is a need for a method for efficiently processing a large amount of point data.

### [Disclosure]

### [Technical Problem]

Embodiments provide a device and method for efficiently processing point cloud data. Embodiments provide a point cloud data processing method and device for addressing latency and encoding/decoding complexity.

The technical scope of the embodiments is not limited to the aforementioned technical objects, and may be extended to other technical objects that may be inferred by those skilled in the art based on the entire contents disclosed herein.

### [Technical Solution]

A decoding method according to embodiments may include receiving a bitstream containing point cloud data, and decoding the point cloud data. An encoding method according to embodiments may include encoding point cloud data, and transmitting a bitstream containing the point cloud data.

### [Advantageous Effects]

Devices and methods according to embodiments may process point cloud data with high efficiency.

The devices and methods according to the embodiments may provide a high-quality point cloud service.

The devices and methods according to the embodiments may provide point cloud content for providing general-purpose services such as a VR service and a self-driving service.

### [Description of Drawings]

The accompanying drawings, which are included to provide a further understanding of the disclosure and are incorporated in and constitute a part of this application, illustrate embodiment(s) of the disclosure and together with the description serve to explain the principle of the disclosure. For a better understanding of various embodiments described below, reference should be made to the description of the following embodiments in connection with the accompanying drawings. The same reference numbers will be used throughout the drawings to refer to the same or like parts.
FIG. 1 shows an exemplary point cloud content providing system according to embodiments;
FIG. 2 is a block diagram illustrating a point cloud content providing operation according to embodiments;
FIG. 3 illustrates an exemplary point cloud encoder according to embodiments;
FIG. 4 shows an example of an octree and occupancy code according to embodiments;
FIG. 5 illustrates an example of point configuration in each LOD according to embodiments;
FIG. 6 illustrates an example of point configuration in each LOD according to embodiments;
FIG. 7 illustrates a point cloud decoder according to embodiments;
FIG. 8 illustrates a transmission device according to embodiments;
FIG. 9 illustrates a reception device according to embodiments;
FIG. 10 illustrates an exemplary structure operable in connection with point cloud data transmission/reception methods/devices according to embodiments;
FIG. 11 illustrates point cloud data including a road and objects according to embodiments;
FIG. 12 illustrates point cloud data including a road and objects according to embodiments;
FIG. 13 illustrates types of a prediction unit (PU) according to embodiments;
FIG. 14 illustrates generation of a predictive tree for a road type according to embodiments;
FIG. 15 illustrates generation of a predictive tree for a road type according to embodiments;
FIG. 16 illustrates an example of object rotation according to embodiments;
FIG. 17 illustrates generation of a predictive tree for an object type;
FIG. 18 illustrates a point cloud data encoder according to embodiments;
FIG. 19 illustrates a point cloud data decoder according to embodiments;
FIG. 20 illustrates a bitstream containing point cloud data and parameter sets according to embodiments;
FIG. 21 shows a geometry parameter set (GPS) according to embodiments;
FIG. 22 shows a tile parameter set (TPS) according to embodiments;
FIG. 23 shows a geometry slice header according to embodiments;
FIG. 24 shows a geometry PU header according to embodiments;
FIG. 25 shows a predictive tree node according to embodiments;
FIG. 26 illustrates a point cloud data encoding method according to embodiments; and
FIG. 27 illustrates a point cloud data decoding method according to embodiments.

### [Best Mode]

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that may be implemented according to the present disclosure. The following detailed description includes specific details in order to provide a thorough understanding of the present disclosure. However, it will be apparent to those skilled in the art that the present disclosure may be practiced without such specific details.

Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings.

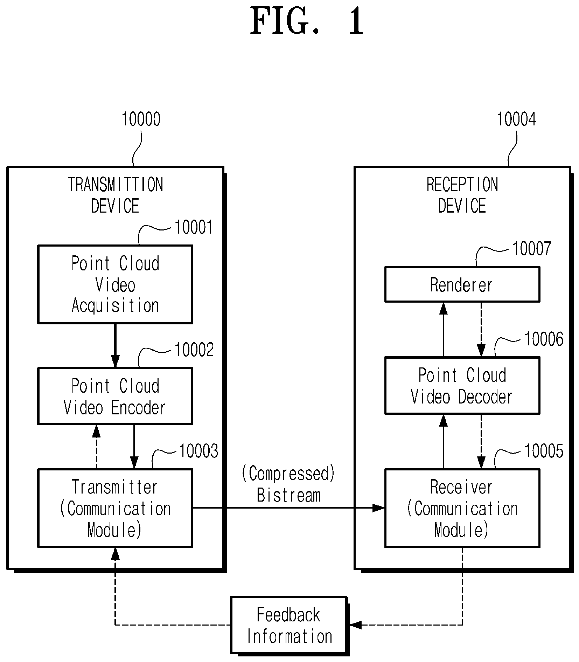

FIG. 1 shows an exemplary point cloud content providing system according to embodiments.

The point cloud content providing system illustrated in FIG. 1 may include a transmission device 10000 and a reception device 10004. The transmission device 10000 and the reception device 10004 are capable of wired or wireless communication to transmit and receive point cloud data.

The point cloud data transmission device 10000 according to the embodiments may secure and process point cloud video (or point cloud content) and transmit the same. According to embodiments, the transmission device 10000 may include a fixed station, a base transceiver system (BTS), a network, an artificial intelligence (AI) device and/or system, a robot, an AR/VR/XR device and/or server. According to embodiments, the transmission device 10000 may include a device, a robot, a vehicle, an AR/VR/XR device, a portable device, a home appliance, an Internet of Thing (IoT) device, and an AI device/server which are configured to perform communication with a base station and/or other wireless devices using a radio access technology (e.g., 5G New RAT (NR), Long Term Evolution (LTE)).

The transmission device 10000 according to the embodiments includes a point cloud video acquirer 10001, a point cloud video encoder 10002, and/or a transmitter (or communication module) 10003.

The point cloud video acquirer 10001 according to the embodiments acquires a point cloud video through a processing process such as capture, synthesis, or generation. The point cloud video is point cloud content represented by a point cloud, which is a set of points positioned in a 3D space, and may be referred to as point cloud video data, point cloud data, or the like. The point cloud video according to the embodiments may include one or more frames. One frame represents a still image/picture. Therefore, the point cloud video may include a point cloud image/frame/picture, and may be referred to as a point cloud image, frame, or picture.

The point cloud video encoder 10002 according to the embodiments encodes the acquired point cloud video data. The point cloud video encoder 10002 may encode the point cloud video data based on point cloud compression coding. The point cloud compression coding according to the embodiments may include geometry-based point cloud compression (G-PCC) coding and/or video-based point cloud compression (V-PCC) coding or next-generation coding. The point cloud compression coding according to the embodiments is not limited to the above-described embodiment. The point cloud video encoder 10002 may output a bitstream containing the encoded point cloud video data. The bitstream may contain not only the encoded point cloud video data, but also signaling information related to encoding of the point cloud video data.

The transmitter 10003 according to the embodiments transmits the bitstream containing the encoded point cloud video data. The bitstream according to the embodiments is encapsulated in a file or segment (e.g., a streaming segment), and is transmitted over various networks such as a broadcasting network and/or a broadband network. Although not shown in the figure, the transmission device 10000 may include an encapsulator (or an encapsulation module) configured to perform an encapsulation operation. According to embodiments, the encapsulator may be included in the transmitter 10003. According to embodiments, the file or segment may be transmitted to the reception device 10004 over a network, or stored in a digital storage medium (e.g., USB, SD, CD, DVD, Blu-ray, HDD, SSD, etc.). The transmitter 10003 according to the embodiments is capable of wired/wireless communication with the reception device 10004 (or the receiver 10005) over a network of 4G, 5G, 6G, etc. In addition, the transmitter may perform a necessary data processing operation according to the network system (e.g., a 4G, 5G or 6G communication network system). The transmission device 10000 may transmit the encapsulated data in an on-demand manner.

The reception device 10004 according to the embodiments includes a receiver 10005, a point cloud video decoder 10006, and/or a renderer 10007. According to embodiments, the reception device 10004 may include a device, a robot, a vehicle, an AR/VR/XR device, a portable device, a home appliance, an Internet of Things (IoT) device, and an AI device/server which are configured to perform communication with a base station and/or other wireless devices using a radio access technology (e.g., 5G New RAT (NR), Long Term Evolution (LTE)).

The receiver 10005 according to the embodiments receives the bitstream containing the point cloud video data or the file/segment in which the bitstream is encapsulated from the network or storage medium. The receiver 10005 may perform necessary data processing according to the network system (e.g., a communication network system of 4G, 5G, 6G, etc.). The receiver 10005 according to the embodiments may decapsulate the received file/segment and output a bitstream. According to embodiments, the receiver 10005 may include a decapsulator (or a decapsulation module) configured to perform a decapsulation operation. The decapsulator may be implemented as an element (or component) separate from the receiver 10005.

The point cloud video decoder 10006 decodes the bitstream containing the point cloud video data. The point cloud video decoder 10006 may decode the point cloud video data according to the method by which the point cloud video data is encoded (e.g., in a reverse process of the operation of the point cloud video encoder 10002). Accordingly, the point cloud video decoder 10006 may decode the point cloud video data by performing point cloud decompression coding, which is the reverse process to the point cloud compression. The point cloud decompression coding includes G-PCC coding.

The renderer 10007 renders the decoded point cloud video data. The renderer 10007 may output point cloud content by rendering not only the point cloud video data but also audio data. According to embodiments, the renderer 10007 may include a display configured to display the point cloud content. According to embodiments, the display may be implemented as a separate device or component rather than being included in the renderer 10007.

The arrows indicated by dotted lines in the drawing represent a transmission path of feedback information acquired by the reception device 10004. The feedback information is information for reflecting interactivity with a user who consumes the point cloud content, and includes information about the user (e.g., head orientation information, viewport information, and the like). In particular, when the point cloud content is content for a service (e.g., self-driving service, etc.) that requires interaction with the user, the feedback information may be provided to the content transmitting side (e.g., the transmission device 10000) and/or the service provider. According to embodiments, the feedback information may be used in the reception device 10004 as well as the transmission device 10000, or may not be provided.

The head orientation information according to embodiments is information about the user's head position, orientation, angle, motion, and the like. The reception device 10004 according to the embodiments may calculate the viewport information based on the head orientation information. The viewport information may be information about a region of a point cloud video that the user is viewing. A viewpoint is a point through which the user is viewing the point cloud video, and may refer to a center point of the viewport region. That is, the viewport is a region centered on the viewpoint, and the size and shape of the region may be determined by a field of view (FOV). Accordingly, the reception device 10004 may extract the viewport information based on a vertical or horizontal FOV supported by the device in addition to the head orientation information. Also, the reception device 10004 performs gaze analysis or the like to check the way the user consumes a point cloud, a region that the user gazes at in the point cloud video, a gaze time, and the like. According to embodiments, the reception device 10004 may transmit feedback information including the result of the gaze analysis to the transmission device 10000. The feedback information according to the embodiments may be acquired in the rendering and/or display process. The feedback information according to the embodiments may be secured by one or more sensors included in the reception device 10004. According to embodiments, the feedback information may be secured by the renderer 10007 or a separate external element (or device, component, or the like). The dotted lines in FIG. 1 represent a process of transmitting the feedback information secured by the renderer 10007. The point cloud content providing system may process (encode/decode) point cloud data based on the feedback information. Accordingly, the point cloud video data decoder 10006 may perform a decoding operation based on the feedback information. The reception device 10004 may transmit the feedback information to the transmission device 10000. The transmission device 10000 (or the point cloud video data encoder 10002) may perform an encoding operation based on the feedback information. Accordingly, the point cloud content providing system may efficiently process necessary data (e.g., point cloud data corresponding to the user's head position) based on the feedback information rather than processing (encoding/decoding) the entire point cloud data, and provide point cloud content to the user.

According to embodiments, the transmission device 10000 may be called an encoder, a transmission device, a transmitter, or the like, and the reception device 10004 may be called a decoder, a receiving device, a receiver, or the like.

The point cloud data processed in the point cloud content providing system of FIG. 1 according to embodiments (through a series of processes of acquisition/encoding/transmission/decoding/rendering) may be referred to as point cloud content data or point cloud video data. According to embodiments, the point cloud content data may be used as a concept covering metadata or signaling information related to the point cloud data.

The elements of the point cloud content providing system illustrated in FIG. 1 may be implemented by hardware, software, a processor, and/or a combination thereof.

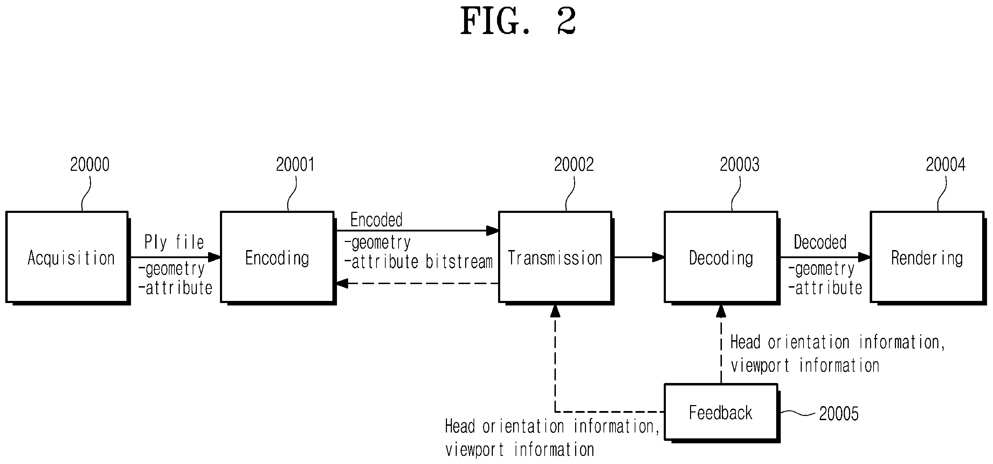

FIG. 2 is a block diagram illustrating a point cloud content providing operation according to embodiments.

The block diagram of FIG. 2 shows the operation of the point cloud content providing system described in FIG. 1. As described above, the point cloud content providing system may process point cloud data based on point cloud compression coding (e.g., G-PCC).

The point cloud content providing system according to the embodiments (e.g., the point cloud transmission device 10000 or the point cloud video acquirer 10001) may acquire a point cloud video (20000). The point cloud video is represented by a point cloud belonging to a coordinate system for expressing a 3D space. The point cloud video according to the embodiments may include a Ply (Polygon File format or the Stanford Triangle format) file. When the point cloud video has one or more frames, the acquired point cloud video may include one or more Ply files. The Ply files contain point cloud data, such as point geometry and/or attributes. The geometry includes positions of points. The position of each point may be represented by parameters (e.g., values of the X, Y, and Z axes) representing a three-dimensional coordinate system (e.g., a coordinate system composed of X, Y and Z axes). The attributes include attributes of points (e.g., information about texture, color (in YCbCr or RGB), reflectance r, transparency, etc. of each point). A point has one or more attributes. For example, a point may have an attribute that is a color, or two attributes that are color and reflectance. According to embodiments, the geometry may be called positions, geometry information, geometry data, position information, position data, or the like, and the attribute may be called attributes, attribute information, attribute data, or the like. The point cloud content providing system (e.g., the point cloud transmission device 10000 or the point cloud video acquirer 10001) may secure point cloud data from information (e.g., depth information, color information, etc.) related to the acquisition process of the point cloud video.

The point cloud content providing system (e.g., the transmission device 10000 or the point cloud video encoder 10002) according to the embodiments may encode the point cloud data (20001). The point cloud content providing system may encode the point cloud data based on point cloud compression coding. As described above, the point cloud data may include the geometry information and attribute information about a point. Accordingly, the point cloud content providing system may perform geometry encoding of encoding the geometry and output a geometry bitstream. The point cloud content providing system may perform attribute encoding of encoding attributes and output an attribute bitstream. According to embodiments, the point cloud content providing system may perform the attribute encoding based on the geometry encoding. The geometry bitstream and the attribute bitstream according to the embodiments may be multiplexed and output as one bitstream. The bitstream according to the embodiments may further contain signaling information related to the geometry encoding and attribute encoding.

The point cloud content providing system (e.g., the transmission device 10000 or the transmitter 10003) according to the embodiments may transmit the encoded point cloud data (20002). As illustrated in FIG. 1, the encoded point cloud data may be represented by a geometry bitstream and an attribute bitstream. In addition, the encoded point cloud data may be transmitted in the form of a bitstream together with signaling information related to encoding of the point cloud data (e.g., signaling information related to the geometry encoding and the attribute encoding). The point cloud content providing system may encapsulate a bitstream that carries the encoded point cloud data and transmit the same in the form of a file or segment.

The point cloud content providing system (e.g., the reception device 10004 or the receiver 10005) according to the embodiments may receive the bitstream containing the encoded point cloud data. In addition, the point cloud content providing system (e.g., the reception device 10004 or the receiver 10005) may demultiplex the bitstream.

The point cloud content providing system (e.g., the reception device 10004 or the point cloud video decoder 10005) may decode the encoded point cloud data (e.g., the geometry bitstream, the attribute bitstream) transmitted in the bitstream. The point cloud content providing system (e.g., the reception device 10004 or the point cloud video decoder 10005) may decode the point cloud video data based on the signaling information related to encoding of the point cloud video data contained in the bitstream. The point cloud content providing system (e.g., the reception device 10004 or the point cloud video decoder 10005) may decode the geometry bitstream to reconstruct the positions (geometry) of points. The point cloud content providing system may reconstruct the attributes of the points by decoding the attribute bitstream based on the reconstructed geometry. The point cloud content providing system (e.g., the reception device 10004 or the point cloud video decoder 10005) may reconstruct the point cloud video based on the positions according to the reconstructed geometry and the decoded attributes.

The point cloud content providing system according to the embodiments (e.g., the reception device 10004 or the renderer 10007) may render the decoded point cloud data (20004). The point cloud content providing system (e.g., the reception device 10004 or the renderer 10007) may render the geometry and attributes decoded through the decoding process, using various rendering methods. Points in the point cloud content may be rendered to a vertex having a certain thickness, a cube having a specific minimum size centered on the corresponding vertex position, or a circle centered on the corresponding vertex position. All or part of the rendered point cloud content is provided to the user through a display (e.g., a VR/AR display, a general display, etc.).

The point cloud content providing system (e.g., the reception device 10004) according to the embodiments may secure feedback information (20005). The point cloud content providing system may encode and/or decode point cloud data based on the feedback information. The feedback information and the operation of the point cloud content providing system according to the embodiments are the same as the feedback information and the operation described with reference to FIG. 1, and thus a detailed description thereof is omitted.

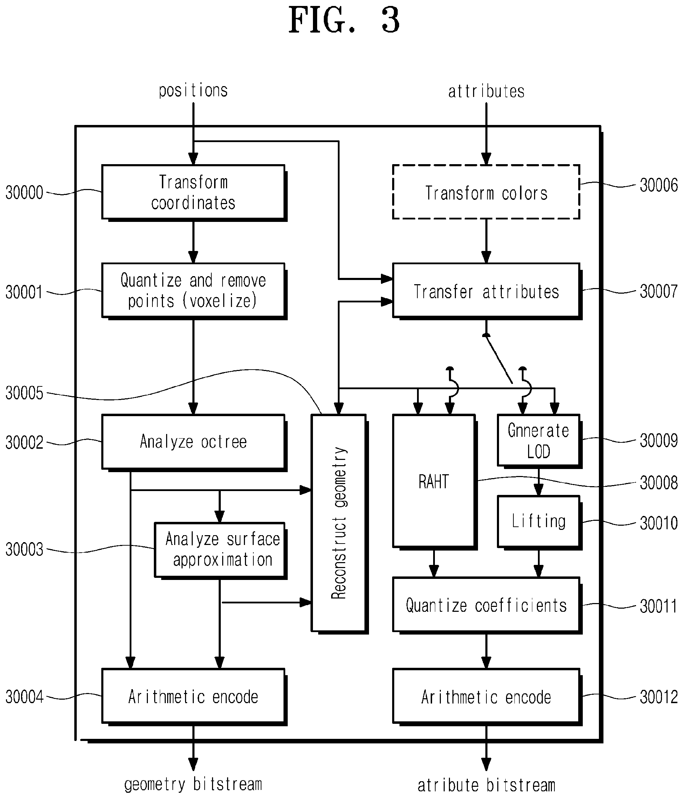

FIG. 3 illustrates an exemplary point cloud encoder according to embodiments.

FIG. 3 shows an example of the point cloud video encoder 10002 of FIG. 1. The point cloud encoder reconstructs and encodes point cloud data (e.g., positions and/or attributes of the points) to adjust the quality of the point cloud content (to, for example, lossless, lossy, or near-lossless) according to the network condition or applications. When the overall size of the point cloud content is large (e.g., point cloud content of 60 Gbps is given for 30 fps), the point cloud content providing system may fail to stream the content in real time. Accordingly, the point cloud content providing system may reconstruct the point cloud content based on the maximum target bitrate to provide the same in accordance with the network environment or the like.

As described with reference to FIGS. 1 and 2, the point cloud encoder may perform geometry encoding and attribute encoding. The geometry encoding is performed before the attribute encoding.

The point cloud encoder according to the embodiments includes a coordinate transformer (Transform coordinates) 30000, a quantizer (Quantize and remove points (voxelize)) 30001, an octree analyzer (Analyze octree) 30002, and a surface approximation analyzer (Analyze surface approximation) 30003, an arithmetic encoder (Arithmetic encode) 30004, a geometry reconstructor (Reconstruct geometry) 30005, a color transformer (Transform colors) 30006, an attribute transformer (Transform attributes) 30007, a RAHT transformer (RAHT) 30008, an LOD generator (Generate LOD) 30009, a lifting transformer (Lifting) 30010, a coefficient quantizer (Quantize coefficients) 30011, and/or an arithmetic encoder (Arithmetic encode) 30012.

The coordinate transformer 30000, the quantizer 30001, the octree analyzer 30002, the surface approximation analyzer 30003, the arithmetic encoder 30004, and the geometry reconstructor 30005 may perform geometry encoding. The geometry encoding according to the embodiments may include octree geometry coding, predictive tree geometry coding, direct coding, trisoup geometry encoding, and entropy encoding. The direct coding and trisoup geometry encoding are applied selectively or in combination. The geometry encoding is not limited to the above-described example.

As shown in the figure, the coordinate transformer 30000 according to the embodiments receives positions and transforms the same into coordinates. For example, the positions may be transformed into position information in a three-dimensional space (e.g., a three-dimensional space represented by an XYZ coordinate system). The position information in the three-dimensional space according to the embodiments may be referred to as geometry information.

The quantizer 30001 according to the embodiments quantizes the geometry. For example, the quantizer 30001 may quantize the points based on a minimum position value of all points (e.g., a minimum value on each of the X, Y, and Z axes). The quantizer 30001 performs a quantization operation of multiplying the difference between the minimum position value and the position value of each point by a preset quantization scale value and then finding the nearest integer value by rounding the value obtained through the multiplication. Thus, one or more points may have the same quantized position (or position value). The quantizer 30001 according to the embodiments performs voxelization based on the quantized positions to reconstruct quantized points. As in the case of a pixel, which is the minimum unit containing 2D image/video information, points of point cloud content (or 3D point cloud video) according to the embodiments may be included in one or more voxels. The term voxel, which is a compound of volume and pixel, refers to a 3D cubic space generated when a 3D space is divided into units (unit=1.0) based on the axes representing the 3D space (e.g., X-axis, Y-axis, and Z-axis). The quantizer 30001 may match groups of points in the 3D space with voxels. According to embodiments, one voxel may include only one point. According to embodiments, one voxel may include one or more points. In order to express one voxel as one point, the position of the center of a voxel may be set based on the positions of one or more points included in the voxel. In this case, attributes of all positions included in one voxel may be combined and assigned to the voxel.

The octree analyzer 30002 according to the embodiments performs octree geometry coding (or octree coding) to present voxels in an octree structure. The octree structure represents points matched with voxels, based on the octal tree structure.

The surface approximation analyzer 30003 according to the embodiments may analyze and approximate the octree. The octree analysis and approximation according to the embodiments is a process of analyzing a region containing a plurality of points to efficiently provide octree and voxelization.

The arithmetic encoder 30004 according to the embodiments performs entropy encoding on the octree and/or the approximated octree. For example, the encoding scheme includes arithmetic encoding. As a result of the encoding, a geometry bitstream is generated.

The color transformer 30006, the attribute transformer 30007, the RAHT transformer 30008, the LOD generator 30009, the lifting transformer 30010, the coefficient quantizer 30011, and/or the arithmetic encoder 30012 perform attribute encoding. As described above, one point may have one or more attributes. The attribute encoding according to the embodiments is equally applied to the attributes that one point has. However, when an attribute (e.g., color) includes one or more elements, attribute encoding is independently applied to each element. The attribute encoding according to the embodiments includes color transform coding, attribute transform coding, region adaptive hierarchical transform (RAHT) coding, interpolation-based hierarchical nearest-neighbor prediction (prediction transform) coding, and interpolation-based hierarchical nearest-neighbor prediction with an update/lifting step (lifting transform) coding. Depending on the point cloud content, the RAHT coding, the prediction transform coding and the lifting transform coding described above may be selectively used, or a combination of one or more of the coding schemes may be used. The attribute encoding according to the embodiments is not limited to the above-described example.

The color transformer 30006 according to the embodiments performs color transform coding of transforming color values (or textures) included in the attributes. For example, the color transformer 30006 may transform the format of color information (for example, from RGB to YCbCr). The operation of the color transformer 30006 according to embodiments may be optionally applied according to the color values included in the attributes.

The geometry reconstructor 30005 according to the embodiments reconstructs (decompresses) the octree and/or the approximated octree. The geometry reconstructor 30005 reconstructs the octree/voxels based on the result of analyzing the distribution of points. The reconstructed octree/voxels may be referred to as reconstructed geometry (restored geometry).

The attribute transformer 30007 according to the embodiments performs attribute transformation to transform the attributes based on the reconstructed geometry and/or the positions on which geometry encoding is not performed. As described above, since the attributes are dependent on the geometry, the attribute transformer 30007 may transform the attributes based on the reconstructed geometry information. For example, based on the position value of a point included in a voxel, the attribute transformer 30007 may transform the attribute of the point at the position. As described above, when the position of the center of a voxel is set based on the positions of one or more points included in the voxel, the attribute transformer 30007 transforms the attributes of the one or more points. When the trisoup geometry encoding is performed, the attribute transformer 30007 may transform the attributes based on the trisoup geometry encoding.

The attribute transformer 30007 may perform the attribute transformation by calculating the average of attributes or attribute values of neighboring points (e.g., color or reflectance of each point) within a specific position/radius from the position (or position value) of the center of each voxel. The attribute transformer 30007 may apply a weight according to the distance from the center to each point in calculating the average. Accordingly, each voxel has a position and a calculated attribute (or attribute value).

The attribute transformer 30007 may search for neighboring points existing within a specific position/radius from the position of the center of each voxel based on the K-D tree or the Morton code. The K-D tree is a binary search tree and supports a data structure capable of managing points based on the positions such that nearest neighbor search (NNS) can be performed quickly. The Morton code is generated by presenting coordinates (e.g., (x, y, z)) representing 3D positions of all points as bit values and mixing the bits. For example, when the coordinates representing the position of a point are (5, 9, 1), the bit values for the coordinates are (0101, 1001, 0001). Mixing the bit values according to the bit index in order of z, y, and x yields 010001000111. This value is expressed as a decimal number of 1095. That is, the Morton code value of the point having coordinates (5, 9, 1) is 1095. The attribute transformer 30007 may order the points based on the Morton code values and perform NNS through a depth-first traversal process. After the attribute transformation operation, the K-D tree or the Morton code is used when the NNS is needed in another transformation process for attribute coding.

As shown in the figure, the transformed attributes are input to the RAHT transformer 40008 and/or the LOD generator 30009.

The RAHT transformer 30008 according to the embodiments performs RAHT coding for predicting attribute information based on the reconstructed geometry information. For example, the RAHT transformer 30008 may predict attribute information of a node at a higher level in the octree based on the attribute information associated with a node at a lower level in the octree.

The LOD generator 30009 according to the embodiments generates a level of detail (LOD) to perform prediction transform coding. The LOD according to the embodiments is a degree of detail of point cloud content. As the LOD value decrease, it indicates that the detail of the point cloud content is degraded. As the LOD value increases, it indicates that the detail of the point cloud content is enhanced. Points may be classified by the LOD.

The lifting transformer 30010 according to the embodiments performs lifting transform coding of transforming the attributes a point cloud based on weights. As described above, lifting transform coding may be optionally applied.

The coefficient quantizer 30011 according to the embodiments quantizes the attribute-coded attributes based on coefficients.

The arithmetic encoder 30012 according to the embodiments encodes the quantized attributes based on arithmetic coding.

Although not shown in the figure, the elements of the point cloud encoder of FIG. 3 may be implemented by hardware including one or more processors or integrated circuits configured to communicate with one or more memories included in the point cloud providing device, software, firmware, or a combination thereof. The one or more processors may perform at least one of the operations and/or functions of the elements of the point cloud encoder of FIG. 3 described above. Additionally, the one or more processors may operate or execute a set of software programs and/or instructions for performing the operations and/or functions of the elements of the point cloud encoder of FIG. 3. The one or more memories according to the embodiments may include a high speed random access memory, or include a non-volatile memory (e.g., one or more magnetic disk storage devices, flash memory devices, or other non-volatile solid-state memory devices).

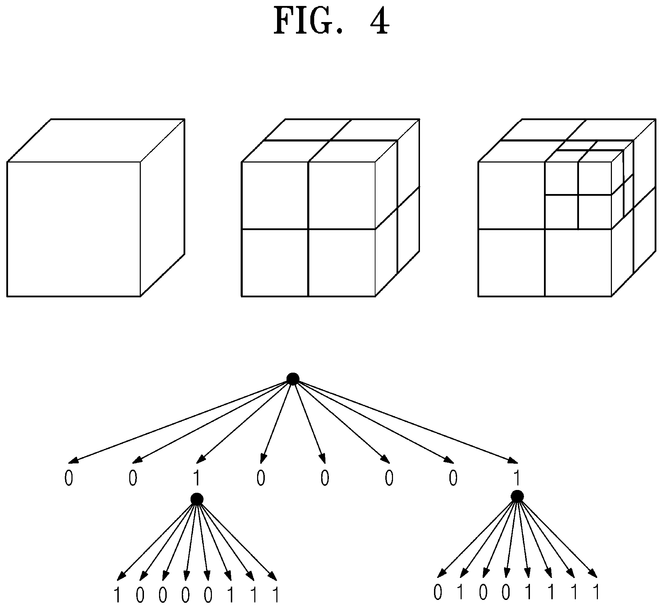

FIG. 4 shows an example of an octree and occupancy code according to embodiments.

As described with reference to FIGS. 1 to 3, the point cloud content providing system (point cloud video encoder 10002) or the point cloud encoder (e.g., the octree analyzer 30002) performs octree geometry coding (or octree coding) based on an octree structure to efficiently manage the region and/or position of the voxel.

The upper part of FIG. 4 shows an octree structure. The 3D space of the point cloud content according to the embodiments is represented by axes (e.g., X-axis, Y-axis, and Z-axis) of the coordinate system. The octree structure is created by recursive subdividing of a cubical axis-aligned bounding box defined by two poles (0, 0, 0) and (2^{d}, 2^{d}, 2^{d}). Here, 2d may be set to a value constituting the smallest bounding box surrounding all points of the point cloud content (or point cloud video). Here, d denotes the depth of the octree. The value of d is determined in the following equation. In the following equation, (x^{int}ₙ, y^{int}ₙ, z^{int}ₙ) denotes the positions (or position values) of quantized points.$d = Ceil \left(Log2\left(Max\left(x_{n}^{∧}int,y_{n}^{∧}int,z_{n}^{∧}in,n=1,…,N\right)+1\right)\right)$

As shown in the middle of the upper part of FIG. 4, the entire 3D space may be divided into eight spaces according to partition. Each divided space is represented by a cube with six faces. As shown in the upper right of FIG. 4, each of the eight spaces is divided again based on the axes of the coordinate system (e.g., X-axis, Y-axis, and Z-axis). Accordingly, each space is divided into eight smaller spaces. The divided smaller space is also represented by a cube with six faces. This partitioning scheme is applied until the leaf node of the octree becomes a voxel.

The lower part of FIG. 4 shows an octree occupancy code. The occupancy code of the octree is generated to indicate whether each of the eight divided spaces generated by dividing one space contains at least one point. Accordingly, a single occupancy code is represented by eight child nodes. Each child node represents the occupancy of a divided space, and the child node has a value in 1 bit. Accordingly, the occupancy code is represented as an 8-bit code. That is, when at least one point is contained in the space corresponding to a child node, the node is assigned a value of 1. When no point is contained in the space corresponding to the child node (the space is empty), the node is assigned a value of 0. Since the occupancy code shown in FIG. 4 is 00100001, it indicates that the spaces corresponding to the third child node and the eighth child node among the eight child nodes each contain at least one point. As shown in the figure, each of the third child node and the eighth child node has eight child nodes, and the child nodes are represented by an 8-bit occupancy code. The figure shows that the occupancy code of the third child node is 10000111, and the occupancy code of the eighth child node is 01001111. The point cloud encoder (e.g., the arithmetic encoder 30004) according to the embodiments may perform entropy encoding on the occupancy codes. In order to increase the compression efficiency, the point cloud encoder may perform intra/inter-coding on the occupancy codes. The reception device (e.g., the reception device 10004 or the point cloud video decoder 10006) according to the embodiments reconstructs the octree based on the occupancy codes.

The point cloud encoder (e.g., the point cloud encoder of FIG. 4 or the octree analyzer 30002) according to the embodiments may perform voxelization and octree coding to store the positions of points. However, points are not always evenly distributed in the 3D space, and accordingly there may be a specific region in which fewer points are present. Accordingly, it is inefficient to perform voxelization for the entire 3D space. For example, when a specific region contains few points, voxelization does not need to be performed in the specific region.

Accordingly, for the above-described specific region (or a node other than the leaf node of the octree), the point cloud encoder according to the embodiments may skip voxelization and perform direct coding to directly code the positions of points included in the specific region. The coordinates of a direct coding point according to the embodiments are referred to as direct coding mode (DCM). The point cloud encoder according to the embodiments may also perform trisoup geometry encoding, which is to reconstruct the positions of the points in the specific region (or node) based on voxels, based on a surface model. The trisoup geometry encoding is geometry encoding that represents an object as a series of triangular meshes. Accordingly, the point cloud decoder may generate a point cloud from the mesh surface. The direct coding and trisoup geometry encoding according to the embodiments may be selectively performed. In addition, the direct coding and trisoup geometry encoding according to the embodiments may be performed in combination with octree geometry coding (or octree coding).

To perform direct coding, the option to use the direct mode for applying direct coding should be activated. A node to which direct coding is to be applied is not a leaf node, and points less than a threshold should be present within a specific node. In addition, the total number of points to which direct coding is to be applied should not exceed a preset threshold. When the conditions above are satisfied, the point cloud encoder (or the arithmetic encoder 30004) according to the embodiments may perform entropy coding on the positions (or position values) of the points.

The point cloud encoder (e.g., the surface approximation analyzer 30003) according to the embodiments may determine a specific level of the octree (a level less than the depth d of the octree), and the surface model may be used staring with that level to perform trisoup geometry encoding to reconstruct the positions of points in the region of the node based on voxels (Trisoup mode). The point cloud encoder according to the embodiments may specify a level at which trisoup geometry encoding is to be applied. For example, when the specific level is equal to the depth of the octree, the point cloud encoder does not operate in the trisoup mode. In other words, the point cloud encoder according to the embodiments may operate in the trisoup mode only when the specified level is less than the value of depth of the octree. The 3D cube region of the nodes at the specified level according to the embodiments is called a block. One block may include one or more voxels. The block or voxel may correspond to a brick. Geometry is represented as a surface within each block. The surface according to embodiments may intersect with each edge of a block at most once.

One block has 12 edges, and accordingly there are at least 12 intersections in one block. Each intersection is called a vertex (or apex). A vertex present along an edge is detected when there is at least one occupied voxel adjacent to the edge among all blocks sharing the edge. The occupied voxel according to the embodiments refers to a voxel containing a point. The position of the vertex detected along the edge is the average position along the edge of all voxels adjacent to the edge among all blocks sharing the edge.

Once the vertex is detected, the point cloud encoder according to the embodiments may perform entropy encoding on the starting point (x, y, z) of the edge, the direction vector (Δx, Δy, Δz) of the edge, and the vertex position value (relative position value within the edge). When the trisoup geometry encoding is applied, the point cloud encoder according to the embodiments (e.g., the geometry reconstructor 30005) may generate restored geometry (reconstructed geometry) by performing the triangle reconstruction, up-sampling, and voxelization processes.

The vertices positioned at the edge of the block determine a surface that passes through the block. The surface according to the embodiments is a non-planar polygon. In the triangle reconstruction process, a surface represented by a triangle is reconstructed based on the starting point of the edge, the direction vector of the edge, and the position values of the vertices. The triangle reconstruction process is performed by: i) calculating the centroid value of each vertex, ii) subtracting the center value from each vertex value, and iii) estimating the sum of the squares of the values obtained by the subtraction. $\left[\begin{matrix}{μ}_{x} \\ {μ}_{y} \\ {μ}_{z}\end{matrix}\right] = \frac{1}{n} {\sum }_{i = 1}^{n} \left[\begin{matrix}{x}_{i} \\ {y}_{i} \\ {z}_{i}\end{matrix}\right] \left[\begin{matrix}{\overline{x}}_{i} \\ {\overline{y}}_{i} \\ {\overline{z}}_{i}\end{matrix}\right] = \left[\begin{matrix}{x}_{i} \\ {y}_{i} \\ {z}_{i}\end{matrix}\right] - \left[\begin{matrix}{μ}_{x} \\ {μ}_{y} \\ {μ}_{z}\end{matrix}\right] \left[\begin{matrix}{σ}_{x}^{2} \\ {σ}_{y}^{2} \\ {σ}_{z}^{2}\end{matrix}\right] = {\sum }_{i = 1}^{n} \left[\begin{matrix}{\overline{x}}_{i}^{2} \\ {\overline{y}}_{i}^{2} \\ {\overline{z}}_{i}^{2}\end{matrix}\right]$

The minimum value of the sum is estimated, and the projection process is performed according to the axis with the minimum value. For `example, when the element x is the minimum, each vertex is projected on the x-axis with respect to the center of the block, and projected on the (y, z) plane. When the values obtained through projection on the (y, z) plane are (ai, bi), the value of θ is estimated through atan2(bi, ai), and the vertices are ordered based on the value of θ. The table below shows a combination of vertices for creating a triangle according to the number of the vertices. The vertices are ordered from 1 to n. The table below shows that for four vertices, two triangles may be constructed according to combinations of vertices. The first triangle may consist of vertices 1, 2, and 3 among the ordered vertices, and the second triangle may consist of vertices 3, 4, and 1 among the ordered vertices.

**TABEL 2-1. Triangles formed from vertices ordered 1,...,n**

| n triangles |
|---|
| 3 (1,2,3) |
| 4 (1,2,3), (3,4,1) |
| 5 (1,2,3), (3,4,5), (5,1,3) |
| 6 (1,2,3), (3,4,5), (5,6,1), (1,3,5) |
| 7 (1,2,3), (3,4,5), (5,6,7), (7,1,3), (3,5,7) |
| 8 (1,2,3), (3,4,5), (5,6,7), (7,8,1), (1,3,5), (5,7,1) |
| 9 (1,2,3), (3,4,5), (5,6,7), (7,8,9), (9,1,3), (3,5,7), (7,9,3) |
| 10 (1,2,3), (3,4,5), (5,6,7), (7,8,9), (9,10,1), (1,3,5), (5,7,9), (9,1,5) |
| 11 (1,2,3), (3,4,5), (5,6,7), (7,8,9), (9,10,11), (11,1,3), (3,5,7), (7,9,11), (11,3,7) |
| 12 (1,2,3), (3,4,5), (5,6,7), (7,8,9), (9,10,11), (11,12,1), (1,3,5), (5,7,9), (9,11,1), (1,5,9) |

The upsampling process is performed to add points in the middle along the edge of the triangle and perform voxelization. The added points are generated based on the upsampling factor and the width of the block. The added points are called refined vertices. The point cloud encoder according to the embodiments may voxelize the refined vertices. In addition, the point cloud encoder may perform attribute encoding based on the voxelized positions (or position values).

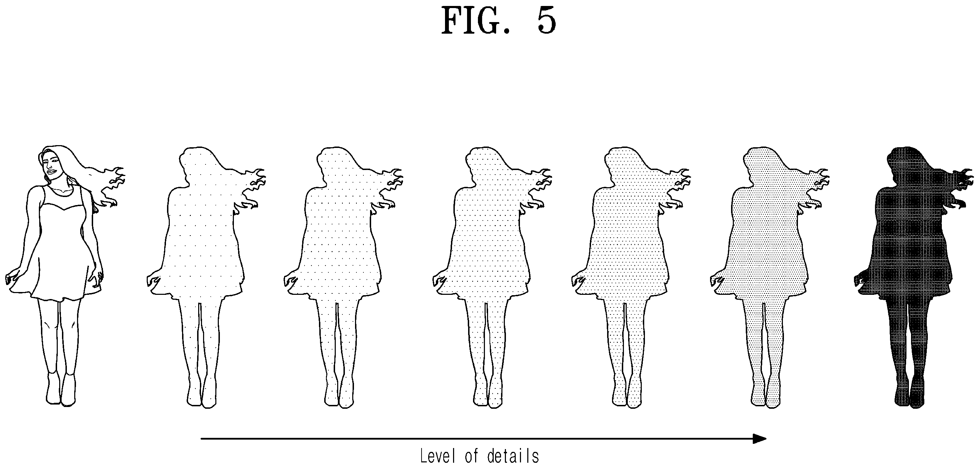

FIG. 5 illustrates an example of point configuration in each LOD according to embodiments.

As described with reference to FIGS. 1 to 4, encoded geometry is reconstructed (decompressed) before attribute encoding is performed. When direct coding is applied, the geometry reconstruction operation may include changing the placement of direct coded points (e.g., placing the direct coded points in front of the point cloud data). When trisoup geometry encoding is applied, the geometry reconstruction process is performed through triangle reconstruction, up-sampling, and voxelization. Since the attribute depends on the geometry, attribute encoding is performed based on the reconstructed geometry.

The point cloud encoder (e.g., the LOD generator 30009) may classify (or reorganize) points by LOD. The figure shows the point cloud content corresponding to LODs. The leftmost picture in the figure represents original point cloud content. The second picture from the left of the figure represents distribution of the points in the lowest LOD, and the rightmost picture in the figure represents distribution of the points in the highest LOD. That is, the points in the lowest LOD are sparsely distributed, and the points in the highest LOD are densely distributed. That is, as the LOD rises in the direction pointed by the arrow indicated at the bottom of the figure, the space (or distance) between points is narrowed.

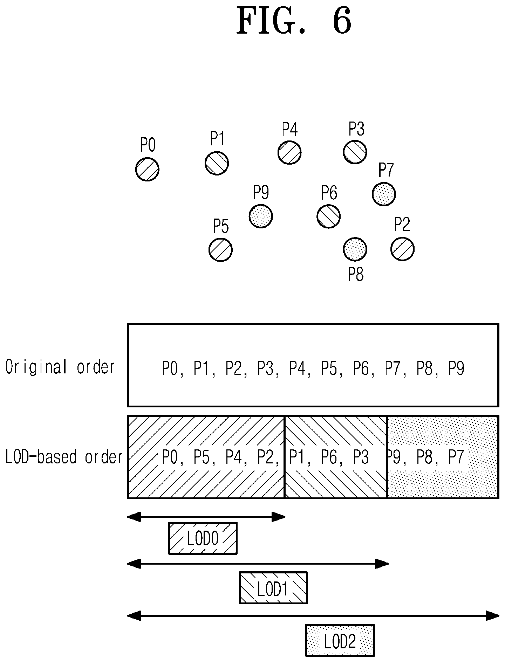

FIG. 6 illustrates an example of point configuration for each LOD according to embodiments.

As described with reference to FIGS. 1 to 5, the point cloud content providing system, or the point cloud encoder (e.g., the point cloud video encoder 10002, the point cloud encoder of FIG. 3, or the LOD generator 30009) may generates an LOD. The LOD is generated by reorganizing the points into a set of refinement levels according to a set LOD distance value (or a set of Euclidean distances). The LOD generation process is performed not only by the point cloud encoder, but also by the point cloud decoder.

The upper part of FIG. 6 shows examples (P0 to P9) of points of the point cloud content distributed in a 3D space. In FIG. 6, the original order represents the order of points P0 to P9 before LOD generation. In FIG. 6, the LOD based order represents the order of points according to the LOD generation. Points are reorganized by LOD. Also, a high LOD contains the points belonging to lower LODs. As shown in FIG. 6, LOD0 contains P0, P5, P4 and P2. LOD1 contains the points of LOD0, P1, P6 and P3. LOD2 contains the points of LOD0, the points of LOD1, P9, P8 and P7.

As described with reference to FIG. 3, the point cloud encoder according to the embodiments may perform prediction transform coding, lifting transform coding, and RAHT transform coding selectively or in combination.

The point cloud encoder according to the embodiments may generate a predictor for points to perform prediction transform coding for setting a predicted attribute (or predicted attribute value) of each point. That is, N predictors may be generated for N points. The predictor according to the embodiments may calculate a weight (=1/distance) based on the LOD value of each point, indexing information about neighboring points present within a set distance for each LOD, and a distance to the neighboring points.

The predicted attribute (or attribute value) according to the embodiments is set to the average of values obtained by multiplying the attributes (or attribute values) (e.g., color, reflectance, etc.) of neighbor points set in the predictor of each point by a weight (or weight value) calculated based on the distance to each neighbor point. The point cloud encoder according to the embodiments (e.g., the coefficient quantizer 30011) may quantize and inversely quantize the residuals (which may be called residual attributes, residual attribute values, or attribute prediction residuals, attribute residuals) obtained by subtracting a predicted attribute (attribute value) from the attribute (attribute value) of each point. The quantization process is configured as shown in the following table.

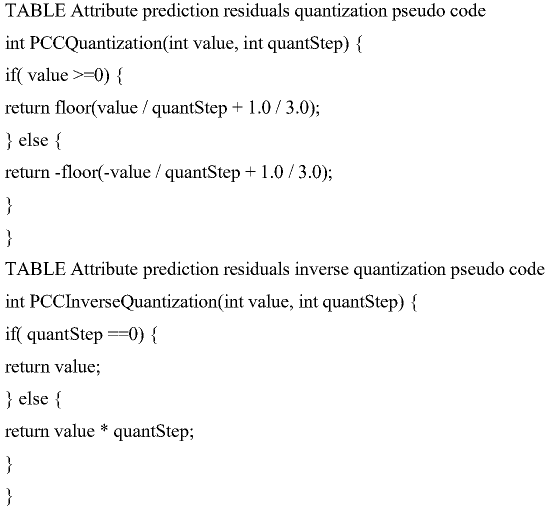

When the predictor of each point has neighbor points, the point cloud encoder (e.g., the arithmetic encoder 30012) according to the embodiments may perform entropy coding on the quantized and inversely quantized residual values as described above. When the predictor of each point has no neighbor point, the point cloud encoder according to the embodiments (e.g., the arithmetic encoder 30012) may perform entropy coding on the attributes of the corresponding point without performing the above-described operation.

The point cloud encoder according to the embodiments (e.g., the lifting transformer 30010) may generate a predictor of each point, set the calculated LOD and register neighbor points in the predictor, and set weights according to the distances to neighbor points to perform lifting transform coding. The lifting transform coding according to the embodiments is similar to the above-described prediction transform coding, but differs therefrom in that weights are cumulatively applied to attribute values. The process of cumulatively applying weights to the attribute values according to embodiments is configured as follows.
1) Create an array Quantization Weight (QW) for storing the weight value of each point. The initial value of all elements of QW is 1.0. Multiply the QW values of the predictor indexes of the neighbor nodes registered in the predictor by the weight of the predictor of the current point, and add the values obtained by the multiplication.
2) Lift prediction process: Subtract the value obtained by multiplying the attribute value of the point by the weight from the existing attribute value to calculate a predicted attribute value.
3) Create temporary arrays called updateweight and update and initialize the temporary arrays to zero.
4) Cumulatively add the weights calculated by multiplying the weights calculated for all predictors by a weight stored in the QW corresponding to a predictor index to the updateweight array as indexes of neighbor nodes. Cumulatively add, to the update array, a value obtained by multiplying the attribute value of the index of a neighbor node by the calculated weight.
5) Lift update process: Divide the attribute values of the update array for all predictors by the weight value of the updateweight array of the predictor index, and add the existing attribute value to the values obtained by the division.
6) Calculate predicted attributes by multiplying the attribute values updated through the lift update process by the weight updated through the lift prediction process (stored in the QW) for all predictors. The point cloud encoder (e.g., coefficient quantizer 30011) according to the embodiments quantizes the predicted attribute values. In addition, the point cloud encoder (e.g., the arithmetic encoder 30012) performs entropy coding on the quantized attribute values.

The point cloud encoder (for example, the RAHT transformer 30008) according to the embodiments may perform RAHT transform coding in which attributes of nodes of a higher level are predicted using the attributes associated with nodes of a lower level in the octree. RAHT transform coding is an example of attribute intra coding through an octree backward scan. The point cloud encoder according to the embodiments scans the entire region from the voxel and repeats the merging process of merging the voxels into a larger block at each step until the root node is reached. The merging process according to the embodiments is performed only on the occupied nodes. The merging process is not performed on the empty node. The merging process is performed on an upper node immediately above the empty node.

The equation below represents a RAHT transformation matrix. In the equation, g_{l _{x,y,z}} denotes the average attribute value of voxels at level l. g_{l _{x,y,z}} may be calculated based on g_{l+1 _{2x,y,z}} and g_{l+1 _{2x+1,x,y,x}}. The weights for g_{l _{2x,y,z}} and g_{l _{2x+1,y,z}} are w1 = w_{l _{2x,y,z}} and w2 = w_{l _{2x+1,y,z}}.$\left⌈\begin{matrix}{g}_{l - {1}_{x , y , z}} \\ {h}_{l - {1}_{x , y , z}}\end{matrix}\right⌉ = {T}_{w 1 w 2} \left⌈\begin{matrix}{g}_{{l}_{2 x , y , z}} \\ {g}_{{l}_{2 x + 1 , y , z}}\end{matrix}\right⌉ , {T}_{w 1 w 2} = \frac{1}{\sqrt{w 1 + w 2}} \left[\begin{matrix}\sqrt{w 1} & \sqrt{w 2} \\ - \sqrt{w 2} & \sqrt{w 1}\end{matrix}\right]$

Here, *g*_{*l*-1 *_{x,y,z}*} is a low-pass value and is used in the merging process at the next higher level. *h*_{*k-*1 *_{x,y,z}*} denotes high-pass coefficients. The high-pass coefficients at each step are quantized and subjected to entropy coding (e.g., encoding by the arithmetic encoder 300012). The weights are calculated as *w*_{*l*_{-1 *x,y,z*}} = *w*_{*l* _{2*x,y,z*}} + *w*_{*l* _{2*x*+1,*y,z*}}. The root node is created through the *g*_{1 _{0,0,0}} and *g*_{1 _{0,0,0}} as follows.$\left⌈\begin{matrix}gDC \\ {h}_{{0}_{0 , 0 , 0}}\end{matrix}\right⌉ = {T}_{w 1000 w 1001} \left⌈\begin{matrix}{g}_{{1}_{0 , 0 , 0 z}} \\ {g}_{{1}_{0 , 0 , 1}}\end{matrix}\right⌉$

The value of gDC is also quantized and subjected to entropy coding like the high-pass coefficients.

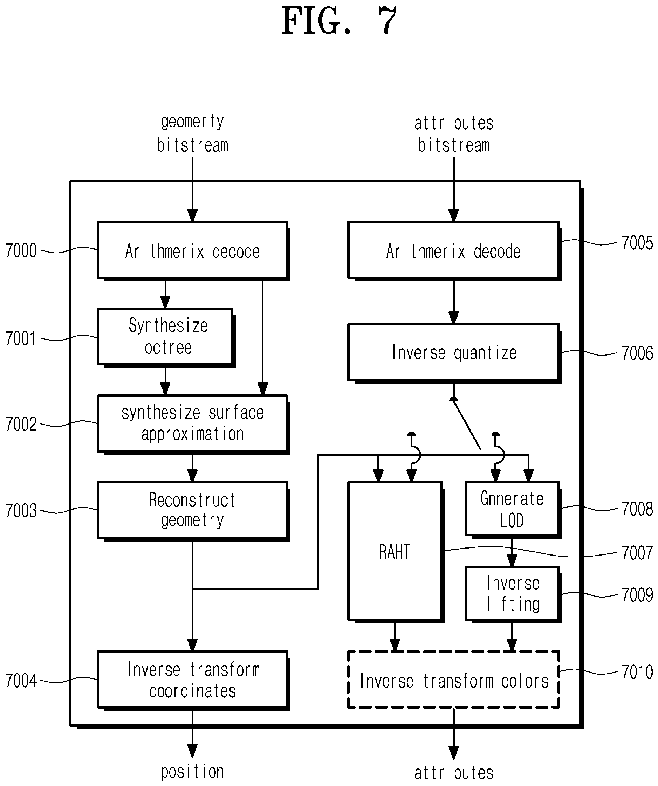

FIG. 7 illustrates a point cloud decoder according to embodiments.

The point cloud decoder illustrated in FIG. 7 is an example of the point cloud decoder and may perform a decoding operation, which is a reverse process to the encoding operation of the point cloud encoder illustrated in FIGS. 1 to 6.

As described with reference to FIGS. 1 and 6, the point cloud decoder may perform geometry decoding and attribute decoding. The geometry decoding is performed before the attribute decoding.

The point cloud decoder according to the embodiments includes an arithmetic decoder (Arithmetic decode) 7000, an octree synthesizer (Synthesize octree) 7001, a surface approximation synthesizer (Synthesize surface approximation) 7002, and a geometry reconstructor (Reconstruct geometry) 7003, a coordinate inverse transformer (Inverse transform coordinates) 7004, an arithmetic decoder (Arithmetic decode) 7005, an inverse quantizer (Inverse quantize) 7006, a RAHT transformer 7007, an LOD generator (Generate LOD) 7008, an inverse lifter (inverse lifting) 7009, and/or a color inverse transformer (Inverse transform colors) 7010.

The arithmetic decoder 7000, the octree synthesizer 7001, the surface approximation synthesizer 7002, and the geometry reconstructor 7003, and the coordinate inverse transformer 7004 may perform geometry decoding. The geometry decoding according to the embodiments may include direct decoding and trisoup geometry decoding. The direct coding and trisoup geometry decoding are selectively applied. The geometry decoding is not limited to the above-described example, and is performed as a reverse process to the geometry encoding described with reference to FIGS. 1 to 6.

The arithmetic decoder 7000 according to the embodiments decodes the received geometry bitstream based on the arithmetic coding. The operation of the arithmetic decoder 7000 corresponds to the reverse process to the arithmetic encoder 30004.

The octree synthesizer 7001 according to the embodiments may generate an octree by acquiring an occupancy code from the decoded geometry bitstream (or information on the geometry secured as a result of decoding). The occupancy code is configured as described in detail with reference to FIGS. 1 to 6.

When the trisoup geometry encoding is applied, the surface approximation synthesizer 7002 according to the embodiments may synthesize a surface based on the decoded geometry and/or the generated octree.

The geometry reconstructor 7003 according to the embodiments may regenerate geometry based on the surface and/or the decoded geometry. As described with reference to FIGS. 1 to 9, direct coding and trisoup geometry encoding are selectively applied. Accordingly, the geometry reconstructor 7003 directly imports and adds position information about the points to which direct coding is applied. When the trisoup geometry encoding is applied, the geometry reconstructor 7003 may reconstruct the geometry by performing the reconstruction operations of the geometry reconstructor 30005, for example, triangle reconstruction, up-sampling, and voxelization. Details are the same as those described with reference to FIG. 6, and thus description thereof is omitted. The reconstructed geometry may include a point cloud picture or frame that does not contain attributes.

The coordinate inverse transformer 7004 according to the embodiments may acquire positions of the points by transforming the coordinates based on the reconstructed geometry.

The arithmetic decoder 7005, the inverse quantizer 7006, the RAHT transformer 7007, the LOD generator 7008, the inverse lifter 7009, and/or the color inverse transformer 7010 may perform the attribute decoding described with reference to FIG. 6. The attribute decoding according to the embodiments includes region adaptive hierarchical transform (RAHT) decoding, interpolation-based hierarchical nearest-neighbor prediction (prediction transform) decoding, and interpolation-based hierarchical nearest-neighbor prediction with an update/lifting step (lifting transform) decoding. The three decoding schemes described above may be used selectively, or a combination of one or more decoding schemes may be used. The attribute decoding according to the embodiments is not limited to the above-described example.

The arithmetic decoder 7005 according to the embodiments decodes the attribute bitstream by arithmetic coding.

The inverse quantizer 7006 according to the embodiments inversely quantizes the information about the decoded attribute bitstream or attributes secured as a result of the decoding, and outputs the inversely quantized attributes (or attribute values). The inverse quantization may be selectively applied based on the attribute encoding of the point cloud encoder.

According to embodiments, the RAHT transformer 7007, the LOD generator 7008, and/or the inverse lifter 7009 may process the reconstructed geometry and the inversely quantized attributes. As described above, the RAHT transformer 7007, the LOD generator 7008, and/or the inverse lifter 7009 may selectively perform a decoding operation corresponding to the encoding of the point cloud encoder.

The color inverse transformer 7010 according to the embodiments performs inverse transform coding to inversely transform a color value (or texture) included in the decoded attributes. The operation of the color inverse transformer 7010 may be selectively performed based on the operation of the color transformer 30006 of the point cloud encoder.

Although not shown in the figure, the elements of the point cloud decoder of FIG. 7 may be implemented by hardware including one or more processors or integrated circuits configured to communicate with one or more memories included in the point cloud providing device, software, firmware, or a combination thereof. The one or more processors may perform at least one or more of the operations and/or functions of the elements of the point cloud decoder of FIG. 7 described above. Additionally, the one or more processors may operate or execute a set of software programs and/or instructions for performing the operations and/or functions of the elements of the point cloud decoder of FIG. 7.

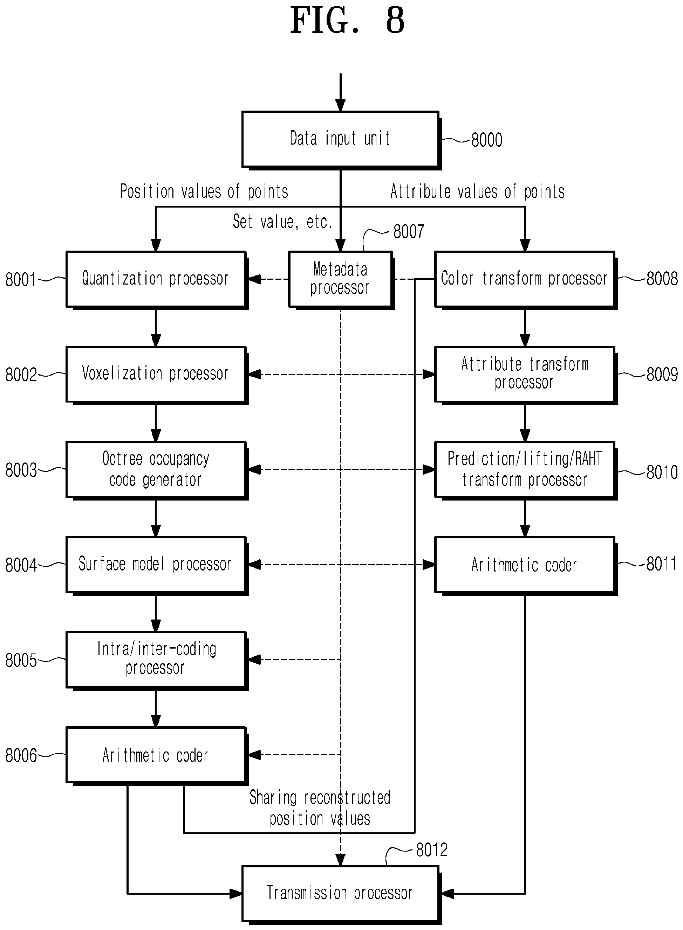

FIG. 8 illustrates a transmission device according to embodiments.

The transmission device shown in FIG. 8 is an example of the transmission device 10000 of FIG. 1 (or the point cloud encoder of FIG. 3). The transmission device illustrated in FIG. 8 may perform one or more of the operations and methods the same as or similar to those of the point cloud encoder described with reference to FIGS. 1 to 6. The transmission device according to the embodiments may include a data input unit 8000, a quantization processor 8001, a voxelization processor 8002, an octree occupancy code generator 8003, a surface model processor 8004, an intra/inter-coding processor 8005, an arithmetic coder 8006, a metadata processor 8007, a color transform processor 8008, an attribute transform processor 8009, a prediction/lifting/RAHT transform processor 8010, an arithmetic coder 8011 and/or a transmission processor 8012.

The data input unit 8000 according to the embodiments receives or acquires point cloud data. The data input unit 8000 may perform an operation and/or acquisition method the same as or similar to the operation and/or acquisition method of the point cloud video acquirer 10001 (or the acquisition process 20000 described with reference to FIG. 2).

The data input unit 8000, the quantization processor 8001, the voxelization processor 8002, the octree occupancy code generator 8003, the surface model processor 8004, the intra/inter-coding processor 8005, and the arithmetic coder 8006 perform geometry encoding. The geometry encoding according to the embodiments is the same as or similar to the geometry encoding described with reference to FIGS. 1 to 9, and thus a detailed description thereof is omitted.

The quantization processor 8001 according to the embodiments quantizes geometry (e.g., position values of points). The operation and/or quantization of the quantization processor 8001 is the same as or similar to the operation and/or quantization of the quantizer 30001 described with reference to FIG. 3. Details are the same as those described with reference to FIGS. 1 to 9.

The voxelization processor 8002 according to the embodiments voxelizes the quantized position values of the points. The voxelization processor 8002 may perform an operation and/or process the same or similar to the operation and/or the voxelization process of the quantizer 30001 described with reference to FIG. 3. Details are the same as those described with reference to FIGS. 1 to 6.

The octree occupancy code generator 8003 according to the embodiments performs octree coding on the voxelized positions of the points based on an octree structure. The octree occupancy code generator 8003 may generate an occupancy code. The octree occupancy code generator 8003 may perform an operation and/or method the same as or similar to the operation and/or method of the point cloud encoder (or the octree analyzer 30002) described with reference to FIGS. 3 and 4. Details are the same as those described with reference to FIGS. 1 to 6.

The surface model processor 8004 according to the embodiments may perform trisoup geometry encoding based on a surface model to reconstruct the positions of points in a specific region (or node) on a voxel basis. The surface model processor 8004 may perform an operation and/or method the same as or similar to the operation and/or method of the point cloud encoder (e.g., the surface approximation analyzer 30003) described with reference to FIG. 3. Details are the same as those described with reference to FIGS. 1 to 6.

The intra/inter-coding processor 8005 according to the embodiments may perform intra/inter-coding on point cloud data. The intra/inter-coding processor 8005 may perform coding the same as or similar to the intra/inter-coding described with reference to FIG. 7. Details are the same as those described with reference to FIG. 7. According to embodiments, the intra/inter-coding processor 8005 may be included in the arithmetic coder 8006.

The arithmetic coder 8006 according to the embodiments performs entropy encoding on an octree of the point cloud data and/or an approximated octree. For example, the encoding scheme includes arithmetic encoding. The arithmetic coder 8006 performs an operation and/or method the same as or similar to the operation and/or method of the arithmetic encoder 30004.

The metadata processor 8007 according to the embodiments processes metadata about the point cloud data, for example, a set value, and provides the same to a necessary processing process such as geometry encoding and/or attribute encoding. Also, the metadata processor 8007 according to the embodiments may generate and/or process signaling information related to the geometry encoding and/or the attribute encoding. The signaling information according to the embodiments may be encoded separately from the geometry encoding and/or the attribute encoding. The signaling information according to the embodiments may be interleaved.

The color transform processor 8008, the attribute transform processor 8009, the prediction/lifting/RAHT transform processor 8010, and the arithmetic coder 8011 perform the attribute encoding. The attribute encoding according to the embodiments is the same as or similar to the attribute encoding described with reference to FIGS. 1 to 6, and thus a detailed description thereof is omitted.

The color transform processor 8008 according to the embodiments performs color transform coding to transform color values included in attributes. The color transform processor 8008 may perform color transform coding based on the reconstructed geometry. The reconstructed geometry is the same as described with reference to FIGS. 1 to 9. Also, it performs an operation and/or method the same as or similar to the operation and/or method of the color transformer 30006 described with reference to FIG. 3 is performed. A detailed description thereof is omitted.

The attribute transform processor 8009 according to the embodiments performs attribute transformation to transform the attributes based on the reconstructed geometry and/or the positions on which geometry encoding is not performed. The attribute transform processor 8009 performs an operation and/or method the same as or similar to the operation and/or method of the attribute transformer 30007 described with reference to FIG. 3. A detailed description thereof is omitted. The prediction/lifting/RAHT transform processor 8010 according to the embodiments may code the transformed attributes by any one or a combination of RAHT coding, prediction transform coding, and lifting transform coding. The prediction/lifting/RAHT transform processor 8010 performs at least one of the operations the same as or similar to the operations of the RAHT transformer 30008, the LOD generator 30009, and the lifting transformer 30010 described with reference to FIG. 3. In addition, the prediction transform coding, the lifting transform coding, and the RAHT transform coding are the same as those described with reference to FIGS. 1 to 9, and thus a detailed description thereof is omitted.

The arithmetic coder 8011 according to the embodiments may encode the coded attributes based on the arithmetic coding. The arithmetic coder 8011 performs an operation and/or method the same as or similar to the operation and/or method of the arithmetic encoder 300012.

The transmission processor 8012 according to the embodiments may transmit each bitstream containing encoded geometry and/or encoded attributes and metadata information, or transmit one bitstream configured with the encoded geometry and/or the encoded attributes and the metadata information. When the encoded geometry and/or the encoded attributes and the metadata information according to the embodiments are configured into one bitstream, the bitstream may include one or more sub-bitstreams. The bitstream according to the embodiments may contain signaling information including a sequence parameter set (SPS) for signaling of a sequence level, a geometry parameter set (GPS) for signaling of geometry information coding, an attribute parameter set (APS) for signaling of attribute information coding, and a tile parameter set (TPS) for signaling of a tile level, and slice data. The slice data may include information about one or more slices. One slice according to embodiments may include one geometry bitstream Geom00 and one or more attribute bitstreams Attr00 and Attr10.

A slice refers to a series of syntax elements representing the entirety or part of a coded point cloud frame.

The TPS according to the embodiments may include information about each tile (e.g., coordinate information and height/size information about a bounding box) for one or more tiles. The geometry bitstream may contain a header and a payload. The header of the geometry bitstream according to the embodiments may contain a parameter set identifier (geom_parameter_set_id), a tile identifier (geom_tile_id) and a slice identifier (geom_slice_id) included in the GPS, and information about the data contained in the payload. As described above, the metadata processor 8007 according to the embodiments may generate and/or process the signaling information and transmit the same to the transmission processor 8012. According to embodiments, the elements to perform geometry encoding and the elements to perform attribute encoding may share data/information with each other as indicated by dotted lines. The transmission processor 8012 according to the embodiments may perform an operation and/or transmission method the same as or similar to the operation and/or transmission method of the transmitter 10003. Details are the same as those described with reference to FIGS. 1 and 2, and thus a description thereof is omitted.

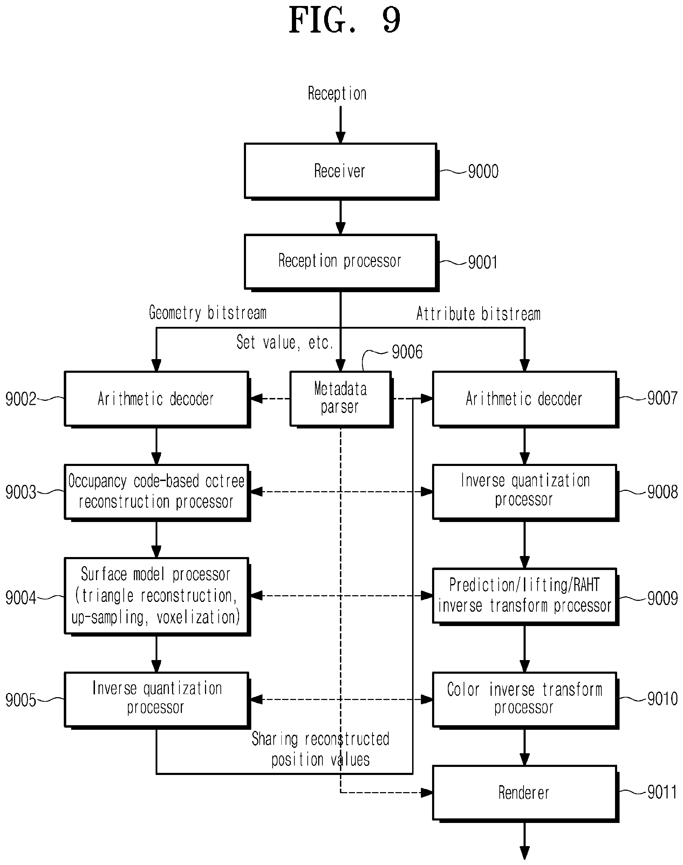

FIG. 9 illustrates a reception device according to embodiments.

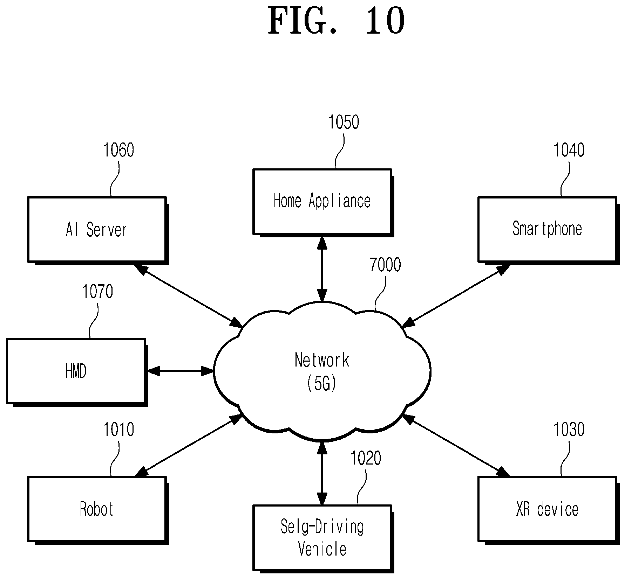

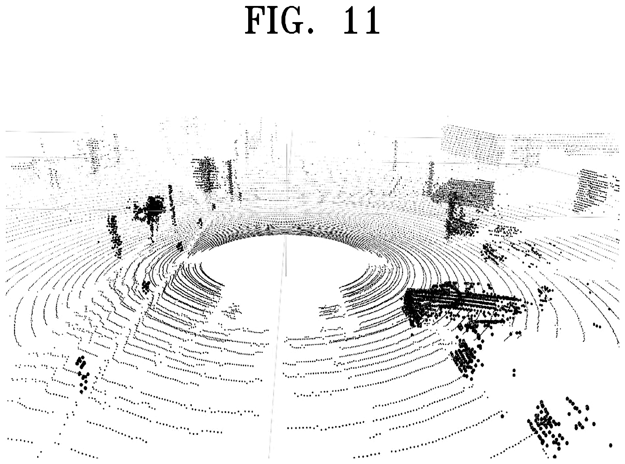

The reception device illustrated in FIG. 9 is an example of the reception device 10004 of FIG. 1 (or the point cloud decoder of FIGS. 10 and 11). The reception device illustrated in FIG. 9 may perform one or more of the operations and methods the same as or similar to those of the point cloud decoder described with reference to FIGS. 1 to 11.

The reception device according to the embodiment may include a receiver 9000, a reception processor 9001, an arithmetic decoder 9002, an occupancy code-based octree reconstruction processor 9003, a surface model processor (triangle reconstruction, up-sampling, voxelization) 9004, an inverse quantization processor 9005, a metadata parser 9006, an arithmetic decoder 9007, an inverse quantization processor 9008, a prediction/lifting/RAHT inverse transform processor 9009, a color inverse transform processor 9010, and/or a renderer 9011. Each element for decoding according to the embodiments may perform a reverse process to the operation of a corresponding element for encoding according to the embodiments.

The receiver 9000 according to the embodiments receives point cloud data. The receiver 9000 may perform an operation and/or reception method the same as or similar to the operation and/or reception method of the receiver 10005 of FIG. 1. The detailed description thereof is omitted.

The reception processor 9001 according to the embodiments may acquire a geometry bitstream and/or an attribute bitstream from the received data. The reception processor 9001 may be included in the receiver 9000.

The arithmetic decoder 9002, the occupancy code-based octree reconstruction processor 9003, the surface model processor 9004, and the inverse quantization processor 905 may perform geometry decoding. The geometry decoding according to embodiments is the same as or similar to the geometry decoding described with reference to FIGS. 1 to 10, and thus a detailed description thereof is omitted.

The arithmetic decoder 9002 according to the embodiments may decode the geometry bitstream based on arithmetic coding. The arithmetic decoder 9002 performs an operation and/or coding the same as or similar to the operation and/or coding of the arithmetic decoder 7000.

The occupancy code-based octree reconstruction processor 9003 according to the embodiments may reconstruct an octree by acquiring an occupancy code from the decoded geometry bitstream (or information about the geometry secured as a result of decoding). The occupancy code-based octree reconstruction processor 9003 performs an operation and/or method the same as or similar to the operation and/or octree generation method of the octree synthesizer 7001. When the trisoup geometry encoding is applied, the surface model processor 9004 according to the embodiments may perform trisoup geometry decoding and related geometry reconstruction (e.g., triangle reconstruction, up-sampling, voxelization) based on the surface model method. The surface model processor 9004 performs an operation the same as or similar to that of the surface approximation synthesizer 7002 and/or the geometry reconstructor 7003.

The inverse quantization processor 9005 according to the embodiments may inversely quantize the decoded geometry.

The metadata parser 9006 according to the embodiments may parse metadata contained in the received point cloud data, for example, a set value. The metadata parser 9006 may pass the metadata to geometry decoding and/or attribute decoding. The metadata is the same as that described with reference to FIG. 8, and thus a detailed description thereof is omitted.

The arithmetic decoder 9007, the inverse quantization processor 9008, the prediction/lifting/RAHT inverse transform processor 9009 and the color inverse transform processor 9010 perform attribute decoding. The attribute decoding is the same as or similar to the attribute decoding described with reference to FIGS. 1 to 10, and thus a detailed description thereof is omitted.

The arithmetic decoder 9007 according to the embodiments may decode the attribute bitstream by arithmetic coding. The arithmetic decoder 9007 may decode the attribute bitstream based on the reconstructed geometry. The arithmetic decoder 9007 performs an operation and/or coding the same as or similar to the operation and/or coding of the arithmetic decoder 7005.

The inverse quantization processor 9008 according to the embodiments may inversely quantize the decoded attribute bitstream. The inverse quantization processor 9008 performs an operation and/or method the same as or similar to the operation and/or inverse quantization method of the inverse quantizer 7006.

The prediction/lifting/RAHT inverse transform processor 9009 according to the embodiments may process the reconstructed geometry and the inversely quantized attributes. The prediction/lifting/RAHT inverse transform processor 9009 performs one or more of operations and/or decoding the same as or similar to the operations and/or decoding of the RAHT transformer 7007, the LOD generator 7008, and/or the inverse lifter 7009. The color inverse transform processor 9010 according to the embodiments performs inverse transform coding to inversely transform color values (or textures) included in the decoded attributes. The color inverse transform processor 9010 performs an operation and/or inverse transform coding the same as or similar to the operation and/or inverse transform coding of the color inverse transformer 7010. The renderer 9011 according to the embodiments may render the point cloud data.

FIG. 10 illustrates an exemplary structure operable in connection with point cloud data transmission/reception methods/devices according to embodiments.

The structure of FIG. 10 represents a configuration in which at least one of a server 1060, a robot 1010, a self-driving vehicle 1020, an XR device 1030, a smartphone 1040, a home appliance 1050, and/or a head-mount display (HMD) 1070 is connected to the cloud network 1000. The robot 1010, the self-driving vehicle 1020, the XR device 1030, the smartphone 1040, or the home appliance 1050 is called a device. Further, the XR device 1030 may correspond to a point cloud data (PCC) device according to embodiments or may be operatively connected to the PCC device.

The cloud network 1000 may represent a network that constitutes part of the cloud computing infrastructure or is present in the cloud computing infrastructure. Here, the cloud network 1000 may be configured using a 3G network, 4G or Long Term Evolution (LTE) network, or a 5G network.

The server 1060 may be connected to at least one of the robot 1010, the self-driving vehicle 1020, the XR device 1030, the smartphone 1040, the home appliance 1050, and/or the HMD 1070 over the cloud network 1000 and may assist in at least a part of the processing of the connected devices 1010 to 1070.

The HMD 1070 represents one of the implementation types of the XR device and/or the PCC device according to the embodiments. The HMD type device according to the embodiments includes a communication unit, a control unit, a memory, an I/O unit, a sensor unit, and a power supply unit.

Hereinafter, various embodiments of the devices 1010 to 1050 to which the above-described technology is applied will be described. The devices 1010 to 1050 illustrated in FIG. 10 may be operatively connected/coupled to a point cloud data transmission device and reception device according to the above-described embodiments.

### <PCC+XR>

The XR/PCC device 1030 may employ PCC technology and/or XR (AR+VR) technology, and may be implemented as an HMD, a head-up display (HUD) provided in a vehicle, a television, a mobile phone, a smartphone, a computer, a wearable device, a home appliance, a digital signage, a vehicle, a stationary robot, or a mobile robot.

The XR/PCC device 1030 may analyze 3D point cloud data or image data acquired through various sensors or from an external device and generate position data and attribute data about 3D points. Thereby, the XR/PCC device 1030 may acquire information about the surrounding space or a real object, and render and output an XR object. For example, the XR/PCC device 1030 may match an XR object including auxiliary information about a recognized object with the recognized object and output the matched XR object.

### <PCC+XR+Mobile phone>

The XR/PCC device 1030 may be implemented as a mobile phone 1040 by applying PCC technology.

The mobile phone 1040 may decode and display point cloud content based on the PCC technology.

### <PCC+Self-driving+XR>

The self-driving vehicle 1020 may be implemented as a mobile robot, a vehicle, an unmanned aerial vehicle, or the like by applying the PCC technology and the XR technology.

The self-driving vehicle 1020 to which the XR/PCC technology is applied may represent a self-driving vehicle provided with means for providing an XR image, or a self-driving vehicle that is a target of control/interaction in the XR image. In particular, the self-driving vehicle 1020 which is a target of control/interaction in the XR image may be distinguished from the XR device 1030 and may be operatively connected thereto.

The self-driving vehicle 1020 having means for providing an XR/PCC image may acquire sensor information from sensors including a camera, and output the generated XR/PCC image based on the acquired sensor information. For example, the self-driving vehicle 1020 may have an HUD and output an XR/PCC image thereto, thereby providing an occupant with an XR/PCC object corresponding to a real object or an object present on the screen.

When the XR/PCC object is output to the HUD, at least a part of the XR/PCC object may be output to overlap the real object to which the occupant's eyes are directed. On the other hand, when the XR/PCC object is output on a display provided inside the self-driving vehicle, at least a part of the XR/PCC object may be output to overlap an object on the screen. For example, the self-driving vehicle 1220 may output XR/PCC objects corresponding to objects such as a road, another vehicle, a traffic light, a traffic sign, a two-wheeled vehicle, a pedestrian, and a building.

The virtual reality (VR) technology, the augmented reality (AR) technology, the mixed reality (MR) technology and/or the point cloud compression (PCC) technology according to the embodiments are applicable to various devices.

In other words, the VR technology is a display technology that provides only CG images of real-world objects, backgrounds, and the like. On the other hand, the AR technology refers to a technology that shows a virtually created CG image on the image of a real object. The MR technology is similar to the AR technology described above in that virtual objects to be shown are mixed and combined with the real world. However, the MR technology differs from the AR technology in that the AR technology makes a clear distinction between a real object and a virtual object created as a CG image and uses virtual objects as complementary objects for real objects, whereas the MR technology treats virtual objects as objects having equivalent characteristics as real objects. More specifically, an example of MR technology applications is a hologram service.

Recently, the VR, AR, and MR technologies are sometimes referred to as extended reality (XR) technology rather than being clearly distinguished from each other. Accordingly, embodiments of the present disclosure are applicable to any of the VR, AR, MR, and XR technologies. The encoding/decoding based on PCC, V-PCC, and G-PCC techniques is applicable to such technologies.

The PCC method/device according to the embodiments may be applied to a vehicle that provides a self-driving service.

A vehicle that provides the self-driving service is connected to a PCC device for wired/wireless communication.

When the point cloud data (PCC) transmission/reception device according to the embodiments is connected to a vehicle for wired/wireless communication, the device may receive/process content data related to an AR/VR/PCC service, which may be provided together with the self-driving service, and transmit the same to the vehicle. In the case where the PCC transmission/reception device is mounted on a vehicle, the PCC transmission/reception device may receive/process content data related to the AR/VR/PCC service according to a user input signal input through a user interface device and provide the same to the user. The vehicle or the user interface device according to the embodiments may receive a user input signal. The user input signal according to the embodiments may include a signal indicating the self-driving service.

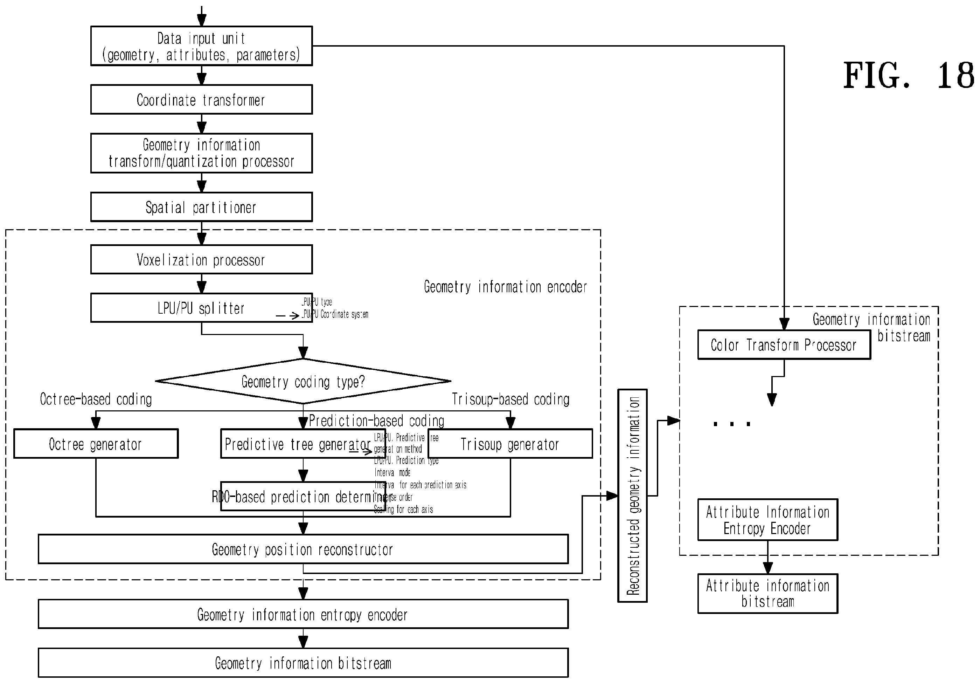

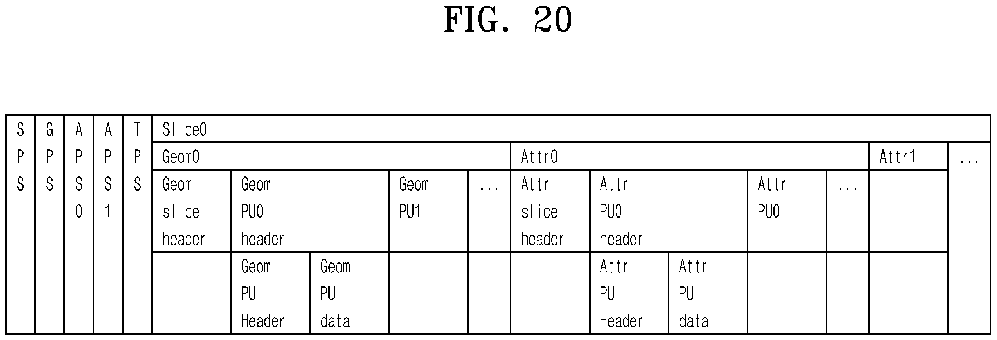

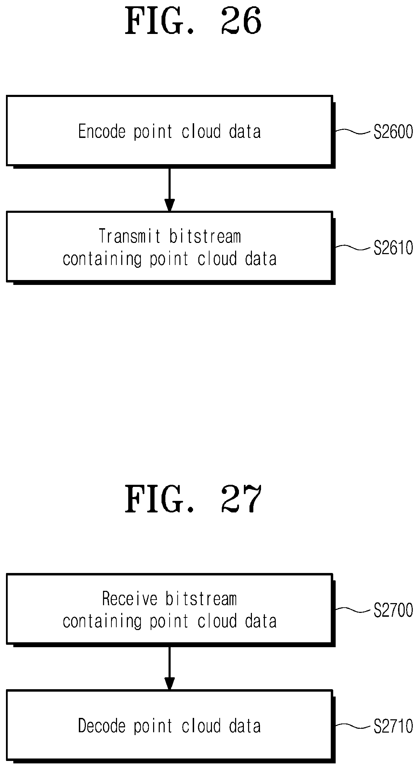

A point cloud encoding method/device according to embodiments may include the transmission device 10000 of FIG. 1 and components in the transmission device, the acquisition-encoding-transmission process of FIG. 2, the encoders of FIGS. 3 and 8, each associated device of FIG. 10, the encoder (or transmission device) of FIG. 18, the bitstream generation of FIGS. 20 to 25, and the encoding method of FIG. 26.

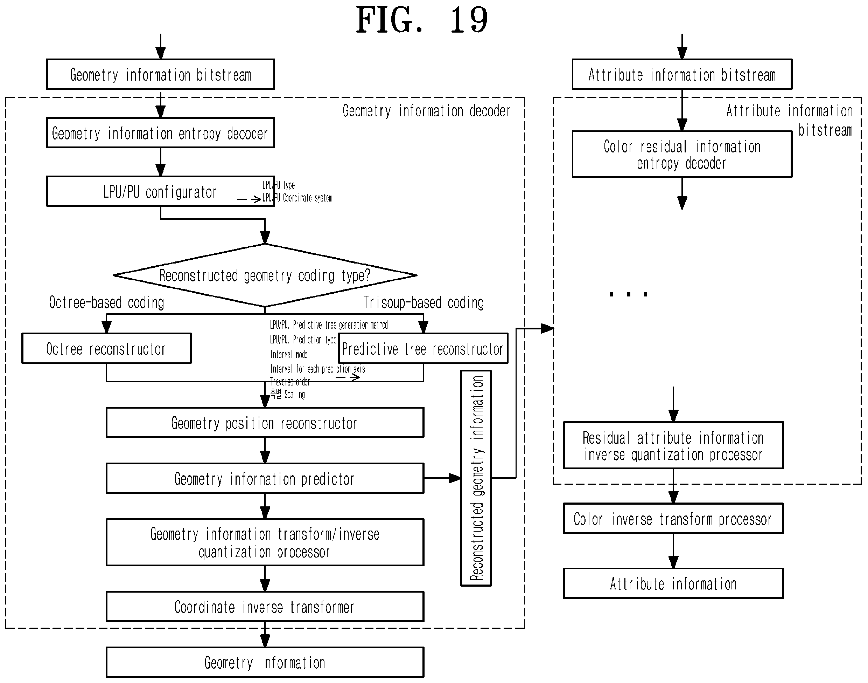

A point cloud decoding method/device according to embodiments may include the reception device 10004 of FIG. 1 and components in the reception device, the transmission-decoding-rendering process of FIG. 2, the decoders of FIGS. 7 and 9, each associated device of FIG. 10, the decoder (or reception device) of FIG. 19, the bitstream parsing of FIGS. 20 to 25, and the decoding method of FIG. 27.

The point cloud encoding/decoding method/device according to embodiments may be referred to as a method/device according to embodiments for short.

The method/device according to embodiments may include an LPU/PU type-based predictive tree coding method for 3D contents captured by LiDAR.

Embodiments include an LPU (Largest Prediction Unit) and/or PU (Prediction Unit) type-based geometry predictive tree coding scheme for efficient geometry coding compression of Geometry-based Point Cloud Compression (G-PCC) for point cloud frames captured by LiDAR equipment.

For example, embodiments may include LPU/PU type definition, a predictive tree construction scheme, a method for configuration and selection of prediction candidates (predictors), and a signaling method.

Embodiments relate to a method for increasing compression efficiency of G-PCC for compressing 3D point cloud data. Hereinafter, an encoder and a encoding device are referred to as an encoder, and a decoder and a decoding device are referred to as a decoder.

A point cloud is composed of a set of points, and each of the points may have geometry information and attribute information. The geometry information is three-dimensional position (XYZ) information, and the attribute information is values of colors (RGB, YUV, etc.) and/or reflectance.

In the G-PCC encoding process, the point cloud may be partitioned into tiles based on regions, and each tile may be partitioned into slices for parallel processing. The process may include compressing geometry on a per-slice basis, and compressing the attribute information based on reconstructed geometry (decoded geometry) configured with position information changed by the compression.

The G-PCC decoding process may include decoding geometry based on an encoded slice-level geometry bitstream and attribute bitstream received, and decoding the attribute information based on reconstructed geometry obtained through the decoding

A compression technique based on an octree, predictive tree, or trisoup may be used for compression of geometry information.

Embodiments include an LPU/PU type-based geometry predictive tree coding method for efficiently applying geometry coding compression of contents captured by LiDAR equipment.

FIG. 11 illustrates point cloud data including a road and objects according to embodiments.

Point cloud data according to embodiments may be content captured by LiDAR equipment on a moving car, and a road and an object may be included together in the data.

Point cloud data including a road and an object together may be distributed and shaped as shown in FIG. 11. A point cloud data encoding/decoding method according to embodiments provides a method for efficiently encoding and decoding a point cloud including a road, an object, and the like.

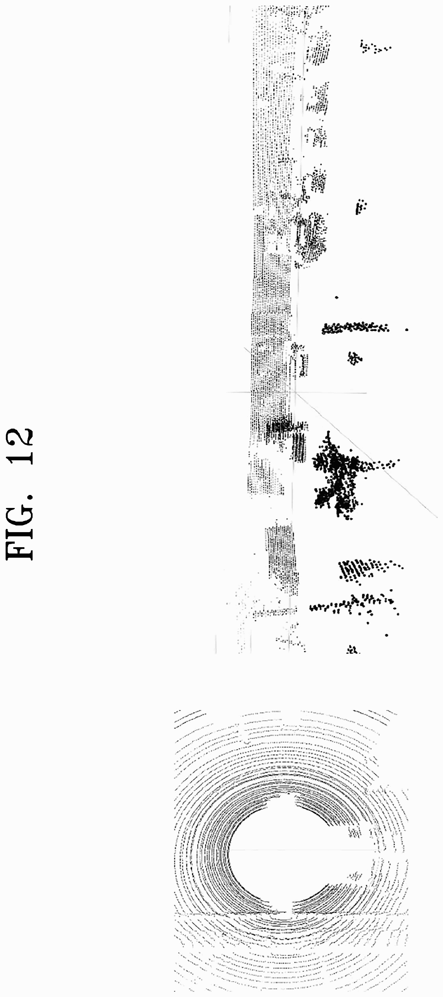

FIG. 12 illustrates point cloud data including a road and objects according to embodiments.

In the captured point cloud, a pattern of points constituting a road and a pattern of points constituting objects may be different. For the road captured by LiDAR equipment, points may be generated in the shape of a circle centered on a center point, which is a position of a sensor, as shown in FIG. 12. For the object, unlike the road, points may form a clustering pattern as shown in FIG. 12.

There may be many objects in a large city. That is, an environment where there are more points corresponding to objects than points corresponding to a road may commonly exist. In addition, there may be a case where the importance of a road is low depending on a usecase. However, there may be clear limitations in a method of constructing a predictive tree and generating a predictor according to characteristics of a road.

Embodiments may increase compression efficiency by supporting a predictive tree coding method suitable for characteristics of each partitioned region based on a separated road and object to efficiently support geometry compression coding of content captured with LiDAR equipment.

Changes and combinations between embodiments are possible. Terms used in this document may be understood based on the intended meaning of the terms within the scope widely used in the relevant technical field.

PLU/PU type-based geometry predictive tree coding may be performed by a PCC encoder and also be performed by a PCC decoder.

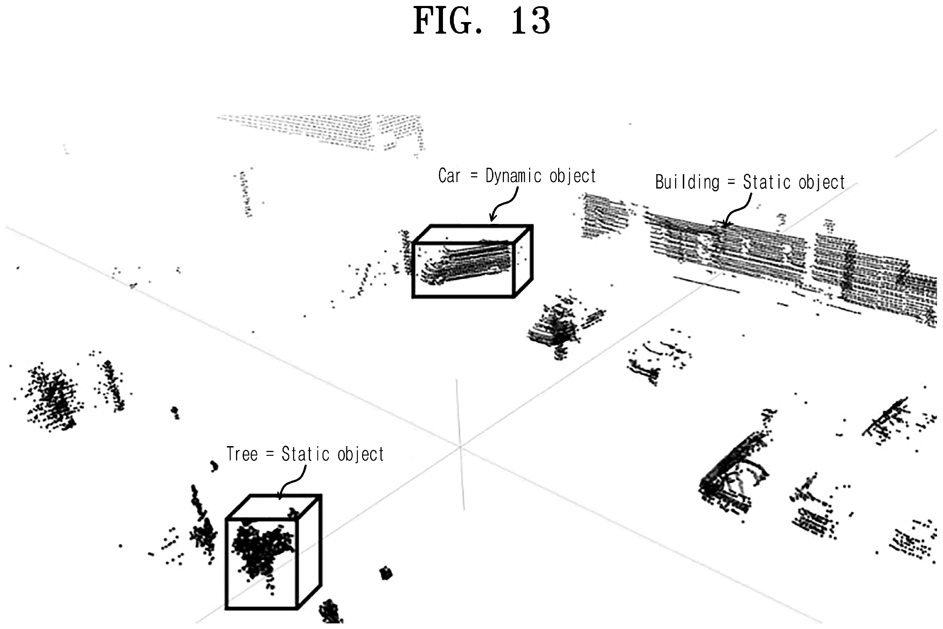

FIG. 13 illustrates types of a prediction unit (PU) according to embodiments.

Types of an LPU and a PU of data captured by LiDAR will be described with reference to FIG. 13.

For a largest prediction unit (LPU) or a prediction unit (PU), a type (LPU.type) may be specified. The type may include a road, a static object, a dynamic object, or a mixture (of a road, a static object, and a dynamic object) representing characteristics. Alternatively, the type may represent a car, a person, a tree, or the like.

LPU and PU may mean a prediction unit. The LPU is a larger unit, and the LPU may include the PU.

For example, when a tree, which is a static object, a car, which is a dynamic object, and a building, which is a static object, are captured by a LiDAR sensor, point cloud data may have a shape as shown in FIG. 13.

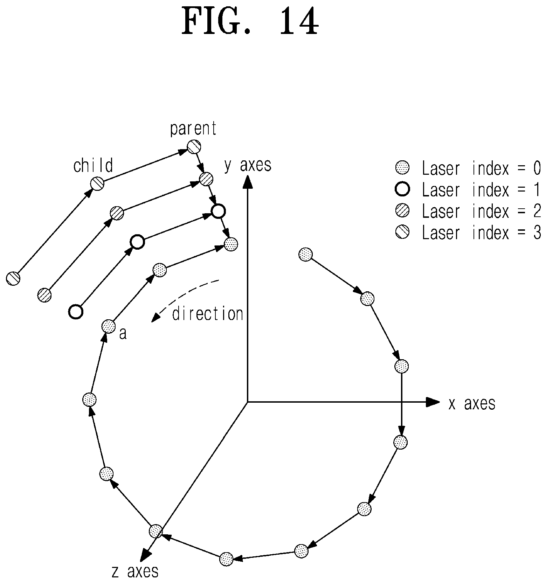

Hereinafter, a predictive tree generation step in a point cloud data encoding/decoding method according to embodiments will be described with reference to FIGS. 14 to 15 and the like.

FIG. 14 illustrates generation of a predictive tree for a road type according to embodiments.

In the point cloud data encoding/decoding method according to embodiments, for an LPU or a PU of a spinning LiDAR road type, a coordinate system may be changed to a spherical coordinate system. Then, on an assumption that points having the same laser index are sorted by azimuth, a predictive tree may be generated in an azimuth direction (e.g., a direction in which the azimuth increases or a direction in which the azimuth decreases).

In a predictive tree, a previous point may be set as a parent of a current point. If there is no previous point, the first point of a previous laser index may be set as a parent node.

Referring to FIG. 14, for points having laser index 0, a predictive tree including a parent point for a current point may be generated based on sorting of azimuth values. For points having laser index 1, a predictive tree including a parent point for a current point may be generated based on sorting of azimuth values. In order to define a parent-child relationship between laser index 0 and laser index 1, a parent point for a point of laser index 0 having the same azimuth value may be defined as a point of laser index 1 having the same azimuth value.

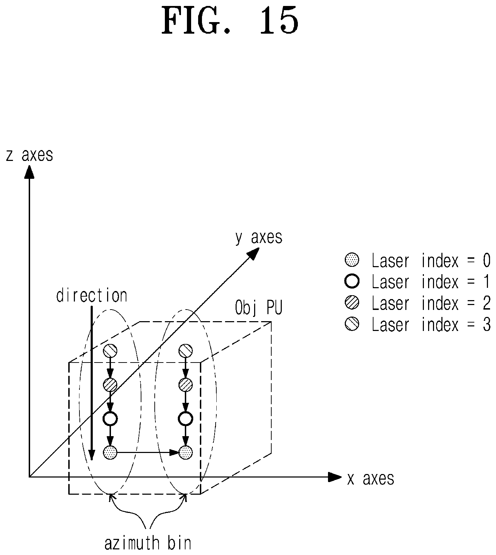

FIG. 15 illustrates generation of a predictive tree for a road type according to embodiments.

For an LPU or a PU of an object type, the coordinate system may be changed to a spherical coordinate system (in the case of a spinning LiDAR-based type) or may maintain a Cartesian coordinate system. When the coordinate system is changed to the spherical coordinate system, the direction in which a predictive tree is generated may be determined. On an assumption that points having the same laser index are sorted by azimuth, a predictive tree may be generated in an azimuth direction (which may be used for a road object).

When a reference direction is determined as height, a predictive tree may be generated based on a laser index based on the same azimuth bin (in a case where the azimuth is divided into specific region units). Points may be sorted by laser index (in ascending or descending order) within the same azimuth bin, and a previous point may be set as a parent node. For a point without a parent node, the nearest point in a previous adjacent azimuth bin may be set as a parent.

That is, as shown in FIG. 15, for points belonging to a certain azimuth range, a predictive tree including a parent point for a current point may be generated based on a direction in which a laser index increases or a direction in which a laser index decreases. For a parent-child relationship between different azimuth bins, a point in an adjacent (or previous) azimuth bin having the same laser index as the current point may be defined as a parent point.

A method of generating a predictive tree according to embodiments is described below:
If (PU.type == OBJECT && PU.coord_System== SPHERICAL) { // or LPU.type, LPU. coord_System

Whether a PU type is an object and whether a PU coordinate system is a spherical coordinate system is checked. Alternatively, whether an LPU type is an object and whether an LPU coordinate system is a spherical coordinate system is checked.

If (PU.tree_generation_mode == HIEGHT_based) { // or PU.tree_generation_mode
Whether a PU tree generation mode is height-based is checked. Alternatively, whether an LPU tree generation mode is height-based is checked.
1. An azimuth bin may be generated, and points may be sorted based on the azimuth.
2. The following operations are performed within the azimuth bin.
   A. Points are sorted by laser index. For example, points may be sorted in ascending order of laser index, or may be sorted in descending order of laser index.
   B. In the order of the points sorted as above, if there is a previous point, the previous point may be set as a parent node of the current point.
   C. For the first point, which has no previous point, the nearest point in a previous adjacent azimuth bin may be set as a parent node.
      } else if (LPU.tree_generation_mode == AZIMUTH_based) {

When the LPU tree generation mode is azimuth-based, the following operations may be performed.
1. On an assumption that points are sorted by azimuth, a previous point may be set as a parent node for points having the same laser index in order.
2. For points having other laser indices for which a parent node is not set, the first point at a previous laser index may be set as a parent node.
   }
   }

Here, PU.tree_generation_mode indicates a method of generating a predictive tree within a PU.

PU.coord_System indicates a coordinate system used within a PU.

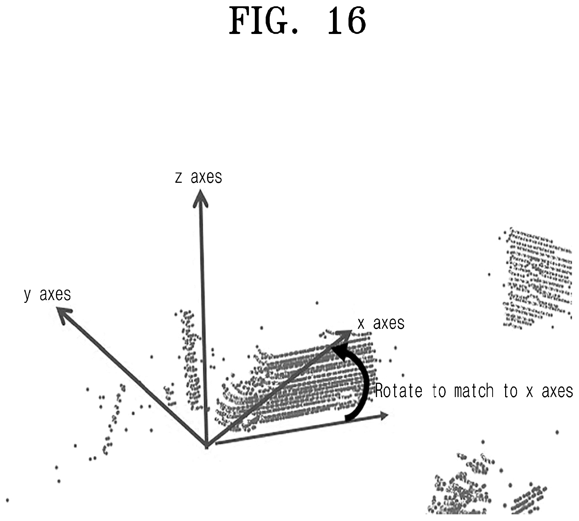

FIG. 16 illustrates an example of object rotation according to embodiments.

In a point cloud data encoding/decoding method according to embodiments, when the Cartesian coordinate system is maintained, the coordinate system may be rotated to match an x-axis or another axis based on any axis of a bounding box of an LPU or a PU. Alternatively, vectors of neighbor points of points having the same laser index may be obtained. An average of the vectors may be obtained, or a vector of a first start point and a last point of the same laser index may be used. Points belonging to the LPU or the PU may be rotated by defining a front point at the bottom left of the bounding box as an origin of a local coordinate system such that the vector matches the X-axis (see FIG. 16). This is because generating a tree based on a local coordinate system of objects can reduce residual values.

That is, as in the example of FIG. 16, when there X, Y, and Z axes (global coordinate system) are given, the X-axis may be rotated to a local coordinate system of points within the LPU or the PU according to the distribution of points.

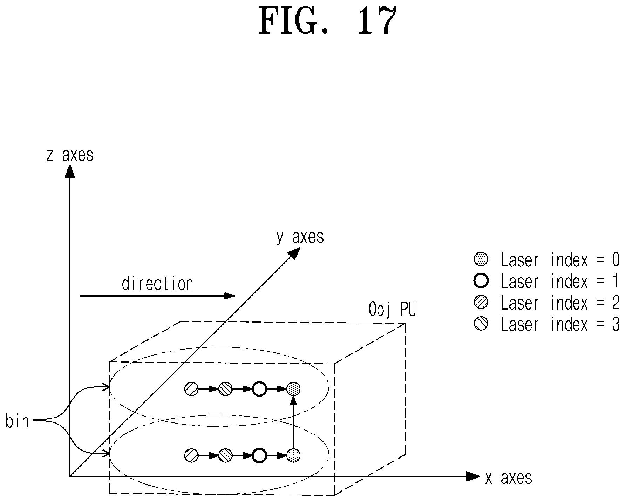

FIG. 17 illustrates generation of a predictive tree for an object type.

Once rotation is applied to all points, points may be configured in a bin of a specific axis in ascending order (or descending order) based on the x-axis (or y- or z-axis), and a parent node may be set with the points sorted in the bin. It may be most efficient to traverse points in order based on the longest axis. For a point for which a parent node is not set within the bin, the nearest point in a previous adjacent bin may be set as the parent node (see FIG. 17).

That is, as in the example of FIG. 17, bins may be generated for points within an object PU based on the Z-axis, and a predictive tree may be generated by defining a parent point for a current point while traversing points in ascending order of the X-axis components based on the X-axis within each bin.

A point cloud data encoding/decoding method according to embodiments may perform the following operations.

If (PU.type == OBJECT && PU.coord_System== CARTESIAN) { // or LPU.type, LPU. coord_System

Whether the PU type is an object and whether the PU coordinate system is a Cartesian coordinate system may be checked. Alternatively, whether the LPU type is an object and whether the LPU coordinate system is a Cartesian coordinate system is checked.
1. Rotation may be performed to match a horizontal axis/vertical axis/height axis of a bounding box (BBOX) of the PU with the existing X, Y, and Z axes. The rotation may be performed based on an origin (left/bottom/front) of the BBOX relative to a local coordinate system to rotate all points to match a selected axis.

If (PU.tree_generation_mode = X_based) {
Whether the PU tree generation mode is X-axis-based may be checked.

Bins may be generated based on a Y value (or a Z value), and the bins may be sorted.

Within a bin:
A. Points are sorted based on the X-axis. For example, the points may be sorted in ascending order of the X-axis, or may be sorted in descending order of the X-axis.
B. In the order of the points, if there is a previous point, the previous point may be set as a parent node.
C. For the first point, which has no previous point, the nearest point in a previous adjacent bin may be set as a parent node.
   } else if (LPU.tree_generation_mode = Y_based) {

Whether the LPU tree generation mode is Y-axis-based may be checked.

Bins may be generated based on an X value (or a Z value), and the bins may be sorted.

Within a bin:
A. Points are sorted based on the Y-axis. For example, the points may be sorted in ascending order of the Y-axis, or may be sorted in descending order of the Y-axis.
B. In the order of the points, if there is a previous point, the previous point may be set as a parent node.
C. For the first point, which ahs no previous point, the nearest point in a previous adjacent bin may be set as a parent node.
   } else if (LPU.tree_generation_mode = Z_based) {

Whether the LPU tree generation mode is Z-axis-based may be checked.

Bins may be generated based on an X value (or a Y value), and the bins may be sorted.

Within a bin:
A. Points are sorted based on the Z-axis. For example, the points may be sorted in ascending order of the Z-axis, or may be sorted in descending order of the Z-axis.
B. In the order of the points, if there is a previous point, the previous point may be set as a parent node.
C. For the first point, which has no previous point, the nearest point in a previous adjacent bin may be set as a parent node.

Hereinafter, based on a predictive tree generated by the above-described method, how to construct and select a predictor in the point cloud data encoding/decoding method according to embodiments will be described.

First method for road/object LPU/PU prediction:
For an LPU or a PU of a spinning LiDAR road type, a predictor list may be configured, and a residual with respect to points within the predictor list may be predicted for selection. In the predictor list, if a difference in radius from a previous point is within a range based on a radius threshold, a most recently registered point (=index 0) may be updated. If it is outside the range of the radius threshold, all points registered in the predictor list may be shifted to the right, and a new point may be registered at the position with index=0. When a point is selected as a predictor, it is removed from the predictor list.

Prediction mode: 0= predictor_list[0], 1=predictor_list[1], 2= predictor_list[2] ....

Second method for road/object LPU/PU prediction:
For an LPU or a PU of a spinning LiDAR road type, the following may be selected as a prediction candidate. A point having the lowest cost may be selected by predicting a residual among the following prediction candidates.

The prediction mode according to this method includes the following.
0 = (0,0,0) or a designated minimum point
1 = parent_node
   $2 = parent _ node + \left(parent_node-grand_parent_node\right)$
   $3 = parent _ node + \left(grand_parent_node-grand_grand_parent_node\right)$

First method for object LPU/PU prediction:
A traverse priority axis of a tree may be set.

Accordingly, points connected as parent/child nodes between bins may be predicted first. Then, each bin may be predicted. In addition, in configuring a bitstream, points corresponding to a priority axis may be compressed first.

The prediction mode according to this method includes the following.

Prediction mode:
0 = parent_node (a parent node is a point (node) within one bin)
$1 = parent _ node + \left(parent_node-grand_parent_node\right)$

If intervals between points for each axis are constant, a scaling value may be applied based on each axis within an LPU/PU of an object type.

### Second method for object LPU/PU prediction:

If intervals between points for each axis are constant, a method of configuring an average interval between axes within an LPU/PU of the object type into a bitstream and transmitting a residual from the average interval may be used.
Interval_mode: 0/1 (Average interval table use mode: an average interval may be stored as a table)
Prediction mode: 0 = parent node
Prediction mode: 1 = parent node + interval [axis]

FIG. 18 illustrates a point cloud data encoder according to embodiments.

A data input unit may read and set input data (e.g., ply, configuration file, etc.).

A coordinate transformer may support a coordinate system change, such as changing xyz axes or transforming an xyz Cartesian coordinate system into a spherical coordinate system.

A geometry information transform and quantization processor may adjust a scale by multiplying the x, y, and z values of the geometry position of a point cloud point by a scale according to a scale setting (scale = geometry quantization value).

A spatial partitioner may partition data into tiles or slices for access by region of content or parallel processing.

A voxelization processor may support the operation of rounding scale-applied geometry position values of points to integers.

A geometry information intra predictor may apply geometry intra coding. Intra coding methods may include octree coding, predictive tree coding, and trisoup coding.

An LPU/PU partitioner partitions points, for which a frame is partitioned into slices, into LPUs/PUs, and may perform prediction based on partitioned regions. The LPU/PU partitioner may partition points into a road/object, and a type may be set according to characteristics of each partitioned LPU or PU. Types may include a road, a static object, a dynamic object, and the like. Each type may be signaled to a decoder. In addition, the LPU/PU partitioner may set/apply a coordinate transformation to be applied to each partitioned region.

A predictive tree generator may operate based on partitioned LPUs/PUs. An LPU/PU may have a type, and a predictive tree may be generated and prediction may be performed according to characteristics of each type. LPU/PU predictive tree generation methods include, as described above, azimuth_based, height_based, radius_based, x_based, y_based, and z_based. LPU/PU prediction types include, as described above, the first method for road-object prediction, the second method for road-object prediction, the first method for object prediction, and the second method for object prediction. In the first method for object prediction, a scaling value for each axis may be transmitted, and a travel order may be set. In the second method for object prediction, an average interval for each axis may be transmitted, and whether an interval mode is used may be signaled. A predictive tree may be generated according to the above settings, and geometry information may be compressed by performing prediction.

When the geometry coding type is an octree, an octree generator may generate an octree (occupancy tree).

When the geometry coding type is a trisoup, a trisoup generator may generate a trisoup.

A residual value for current geometry may be generated based on at least one of an octree, a predictive tree, or a trisoup according to the coding type, and the residual value may be encoded in an arithmetic coding scheme by an entropy encoder to generate and transmit a geometry bitstream.

An attribute information encoder may transform a system of color (attribute).

The attribute information encoder may generate a level of detail (LoD), generate a residual value for a current attribute based on the LoD, and encode the residual value in an arithmetic coding scheme by the entropy encoder to generate and transmit an attribute bitstream.

An encoder may generate and transmit a bitstream containing the encoded geometry, the encoded attribute, and parameter information.

FIG. 19 illustrates a point cloud data decoder according to embodiments.

The operation of the decoder of FIG. 19 may follow an inverse process of the operation of the encoder of FIG. 18.

A geometry entropy decoder may entropy-decode a geometry bitstream.

An LPU/PU configurator may configure LPUs/PUs from a bitstream, transmitted by partitioning a frame into slices. An LPU/PU type may be restored. The type may include a road, a static object, and a dynamic object. An LPU/PU coordinate system may be reconstructed. Thereafter, it may be applied during final reconstruction of geometry information (geometry).

A predictive tree reconstructor may operate based on partitioned LPUs/PUs. An LPU/PU may have a type, and a predictive tree may be generated and prediction may be performed according to characteristics of each type. An LPU/PU predictive tree generation method may be restored, and a tree may be reconstructed according to the generation method (azimuth_based, height_based, radius_based, x_based, y_based, or z_based). An LPU/PU prediction type may be restored, and a prediction value may be estimated according to a prediction type (the first method for road-object prediction, the second method for road-object prediction, the first method for object prediction, or the second method for object prediction). In addition, in the first method for road-object prediction, a scaling value for each axis may be restored and applied during prediction. A traverse order may be restored and applied. In the second method for prediction type-object prediction, an average interval for each axis may be restored and applied in estimating a predicted value. Whether an interval mode is used may be restored and applied in estimating a predicted value. Geometry information may be reconstructed by adding a residual value to the estimated predicted value.

When a geometry coding type is an octree, an octree reconstructor may generate an octree including points of geometry. Based on the octree, a geometry information predictor may predict geometry and reconstruct geometry by summing the same with a residual value.

A geometry position reconstructor may provide reconstructed geometry to an attribute information decoder.

A geometry inverse quantization processor may apply inverse quantization to geometry quantized by the encoder.

A coordinate inverse transformer may inversely transform a coordinate system transformed by the encoder.

An attribute information decoder may decode an attribute included in a bitstream by an entropy decoder in an arithmetic decoding scheme.

The attribute information decoder may generate an LoD and predict an attribute based on the LoD. An attribute may be restored by summing an attribute predicted value with a residual value.

A color inverse transform processor may apply inversely transform to a color transformed by the encoder.

FIG. 20 illustrates a bitstream containing point cloud data and parameter sets according to embodiments.

Related information may be signaled to add/perform embodiments. Signaling information according to embodiments may be used at the transmitting side or the receiving side.

The configuration of an encoded point cloud is as follows. A point cloud data encoder to perform geometry encoding and/or attribute encoding may generate the following encoded point cloud (or a bitstream containing a point cloud). In addition, signaling information related to the point cloud data may be generated and processed by a metadata processor of the point cloud data transmission device and be included in the point cloud as follows.

Each abbreviation means the following. Each abbreviation may be referred to as another term within a range of equivalent meaning: SPS: Sequence Parameter Set; GPS: Geometry Parameter Set; APS: Attribute Parameter Set; TPS: Tile Parameter Set; Geom: Geometry bitstream = geometry slice header + [geometry PU header + geometry PU data] | geometry slice data; Attr: Attribute bitstream = attribute data unit header + [attribute PU header + attribute PU data] | attribute data unit data.

A slice means a unit of encoding/decoding. A slice may be referred to as a data unit or the like.

Option information related to geometry predictive tree coding for each LPU/PU may be added to the GPS or the TPS and signaled.

Option information related to geometry predictive tree coding for each LPU/PU may be added to the TPS or the geometry header for each slice and signaled.

Tiles or slices are provided to allow a point cloud to be divided into regions to be processed.

When dividing a point cloud into regions, a selection scheme with low complexity and somewhat low reliability of results or a selection scheme with high complexity but high reliability may be provided by setting different neighbor point set generation options for regions. It may be set differently according to the capacity of the receiver.

Accordingly, when a point cloud is divided into tiles, different options may be applied to the tiles.

When a point cloud is divided into slices, different options may be applied to the slices.

In a bitstream, a geometry PU may be added, and a geometry PU header and geometry PU data may be added.

The following syntax may be added to a predictive tree node within the bitstream.

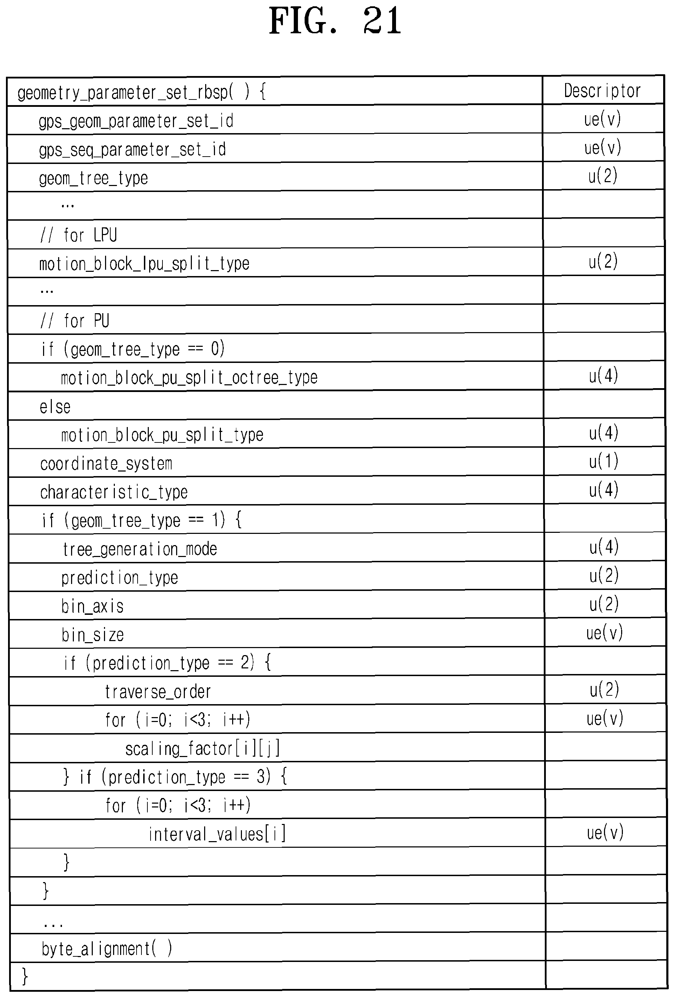

FIG. 21 shows a geometry parameter set (GPS) according to embodiments.

An encoding method according to embodiments may add option information related to geometry predictive tree coding for each LPU/PU to a geometry parameter set in the geometry information encoding/decoding process. Information included in the GPS efficiently supports prediction of geometry.

gps_geom_parameter_set_id: Indicates a GPS identifier for reference by other syntax elements. The value of gps_geom_parameter_set_id is in the range of 0 to 15.

gps_seq_parameter_set_id: Indicates the value of sps_seq_parameter_set_id for an active SPS. The value of gps_seq_parameter_set_id is in the range of 0 to 15.

geom_tree_type: geom_tree_type equal to 0 indicates that position information (geometry) is coded using an octree. geom_tree_type equal to 1 indicates that position information (geometry) is coded using a predictive tree.

motion_block_lpu_split_type: Indicates a reference type for LPU splitting as applied to a frame. For example, the values thereof may indicate the followings: 0= radius-based LPU splitting, 1= azimuth-based LPU splitting, 2= height-based LPU splitting, and 3= integrated LPU splitting. The integrated LPU splitting may mean a method of splitting by integrating at least one or more of radius, azimuth, or height.

motion_block_pu_split_type: Indicates a reference type for PU splitting applied to a frame. For example, the values thereof may indicate the followings: 0= radius-based→azimuth-based→elevation (height)-based splitting application, 1= radius-based→elevation-based→azimuth-based splitting application, 2= azimuth-based→radius-based→elevation-based splitting application, 3= azimuth-based→elevation-based→radius-based splitting application, 4= elevation-based→radius-based→azimuth-based splitting application, and 5= elevation-based→azimuth-based→radius-based splitting application.

motion_block_pu_split_octree_type: May indicate a reference order type for splitting a PU in applying octree-based geometry coding applied to a frame. For example, the values thereof may indicate the followings: 0= x→y→z based splitting application, 1= x→z→y based splitting application, 2= y→x→z based splitting application, 3= y→z→x based splitting application, 4= z→x→y based splitting application, and 5= z→y→x based splitting application.

coordinate_system: Indicates a coordinate system applied to a frame. For example, the values thereof may indicate the followings: 0 = Cartesian coordinate system, and 1 = Spherical coordinate system.

characteristic_type: Indicates a characteristic for a frame. For example, the values thereof may indicate the followings: 0= mixture (road/static object/dynamic object), 1= road, 2= static object, and 3= dynamic object.

tree_generation_mode: Indicates a predictive tree generation method applied to a frame. A tree generation mode may be applied according to a coordinate system. For example, the values thereof may indicate the followings: 0= x_based tree generation (azimuth_based tree generation), 1= y_based tree generation (height/elevation/laser index_based tree generation), and 2= z_based tree generation (radius_based tree generation).

prediction_type: Indicates a prediction method applied to a frame. For example, the values thereof may indicate the followings: 0= first method for road-object prediction, 1= second method for road-object prediction, 3= first method for object prediction, and 4= second method for object prediction.

bin_axis: Indicates a reference axis for grouping in generating a predictive tree applied to a frame. For example, the values thereof may indicate the followings: 0= X-axis, 1= Y-axis, and 2= Z-axis.

bin_size: Indicates a reference size for bin-grouping in generating a predictive tree applied to a frame.

traverse_order: Indicates a predictive tree traverse order applied to a frame. According to a coordinate system, the traverse order may be applied as follows. The values thereof may indicate the followings: 0= X-axis (azimuth), 1= Y-axis (elevation/height/laser index), and 2= Z-axis (radius).

scaling_factor[]: Indicates a scale value for each axis applied in performng prediction applied to a frame.

interval_values []: Indicates an average interval value for each axis in performng prediction applied to a frame.

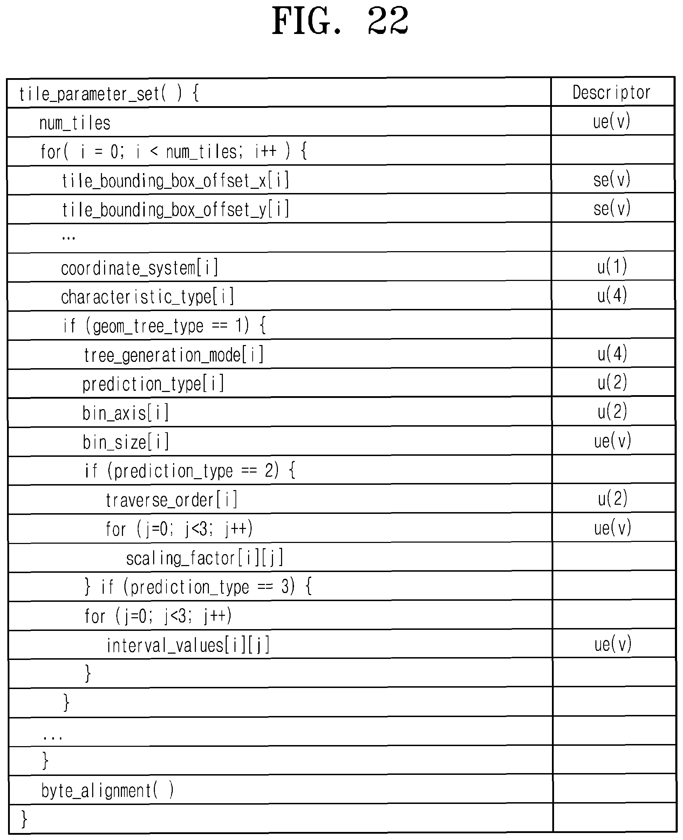

FIG. 22 shows a tile parameter set (TPS) according to embodiments.

An encoding method according to embodiments may add geometry predictive tree coding option information for each LPU/PU to a TPS. Information included in the TPS efficiently supports prediction of geometry.

num_tiles: Indicates the number of tiles signaled for a bitstream. When not present, num_tiles is inferred to be equal to 0.

tile_bounding_box_offset_x[i]: Indicates the x offset of the i-th tile in Cartesian coordinates. If it does not present, a value of tile_bounding_box_offset_x[0] is inferred to be equal to sps_bounding_box_offset_x.

tile_bounding_box_offset_y[i]: Indicates the y offset of the i-th tile in Cartesian coordinates. When not present, the value of tile_bounding_box_offset_y[0] is inferred to be equal to sps_bounding_box_offset_y.

tile_bounding_box_offset_z[i]: Indicates the z-offset of the i-th tile in Cartesian coordinates. When not present, the value of tile_bounding_box_offset_z[0] is inferred to be equal to sps_bounding_box_offset_z.

coordinate_system: Indicates a coordinate system applied to a tile. For example, the values thereof may indicate the followings: 0 = Cartesian coordinate system, and 1 = Spherical coordinate system.

characteristic_type: Indicates a characteristic for a frame. For example, the values thereof may indicate the followings: 0= mixture (road/static object/dynamic object), 1= road, 2= static object, and 3= dynamic object.

tree_generation_mode: Indicates a predictive tree generation method applied to a tile. A tree generation mode may be applied according to a coordinate system as follows. For example, the values thereof may indicate the followings: 0= x_based tree generation (azimuth_based tree generation), 1= y_based tree generation (height/elevation/laser index_based tree generation), and 2= z_based tree generation (radius_based tree generation).

prediction_type: Indicates a prediction method applied to a tile. For example, the values thereof may indicate the followings: 0= first method for road-object prediction, 1= second method for road-object prediction, 3= first method for object prediction, and 4= second method for object prediction.

bin_axis: Indicates a reference axis for grouping in generating a predictive tree applied to a tile. For example, the values thereof may indicate the followings: 0= X-axis, 1= Y-axis, and 2= Z-axis.

bin_size: Indicates a reference size for grouping in generating a predictive tree applied to a tile.

traverse_order: Indicates a predictive tree traverse order applied to a tile. For example, according to a coordinate system, the traverse order may be applied as follows. For example, the values thereof may indicate the followings: 0= X-axis (azimuth), 1= Y-axis (elevation/height/laser index), and 2= Z-axis (radius).

scaling_factor[]: Indicates a scale value for each axis applied in performng prediction applied to a tile.

interval_values []: Indicates an average interval value for each axis in performng prediction applied to a tile.

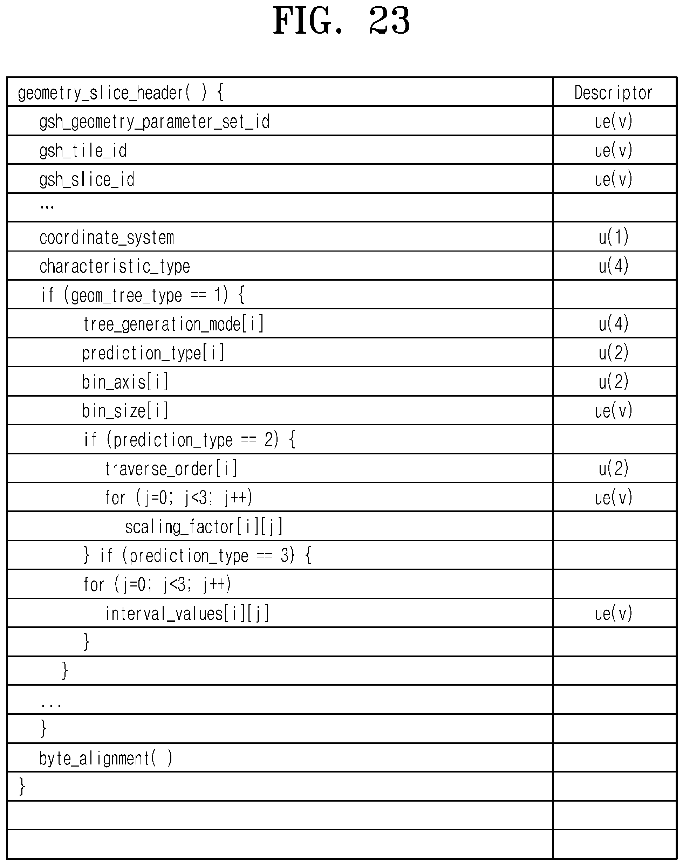

FIG. 23 shows a geometry slice header according to embodiments.

An encoding method according to embodiments may add geometry predictive tree coding option information for each LPU/PU to a geometry slice header in the geometry information encoding/decoding process. Information included in the geometry slice header efficiently supports prediction of geometry.

gsh_geometry_parameter_set_id indicates the value of gps_geom_parameter_set_id of an active GPS.

gsh_tile_id indicates the tile ID value referred to in the GSH. The value of gsh_tile_id is in the range of 0 to XX.

gsh_slice_id indicates a slice header to be referred to by other syntax elements. The value of gsh_slice_id is in the range of 0 to XX.

coordinate_system: Indicates a coordinate system applied to a slice. For example, the values thereof may indicate the followings: 0 = Cartesian coordinate system, and 1 = Spherical coordinate system.

characteristic_type: Indicates a characteristic for a frame. For example, the values thereof may indicate the followings: 0= mixture (road/static object/dynamic object), 1= road, 2= static object, and 3= dynamic object.

tree_generation_mode: Indicates a predictive tree generation method applied to a slice. A tree generation mode may be applied according to a coordinate system as follows. For example, the values thereof may indicate the followings: 0= x_based tree generation (azimuth_based tree generation), 1= y_based tree generation (height/elevation/laser index_based tree generation), and 2= z_based tree generation (radius_based tree generation).

prediction_type: Indicates a prediction method applied to a slice. For example, the values thereof may indicate the followings: 0= first method for road-object prediction, 1= second method for road-object prediction, 3= first method for object prediction, and 4= second method for object prediction.

bin_axis: Indicates a reference axis for grouping in generating a predictive tree applied to a slice. For example, the values thereof may indicate the followings: 0= X-axis, 1= Y-axis, and 2= Z-axis.

bin_size: Indicates a reference size for grouping in generating a predictive tree applied to a slice.

traverse_order: Indicates a predictive tree traverse order applied to a slice. According to a coordinate system, the traverse order may be applied as follows. For example, the values thereof may indicate the followings: 0= X-axis (azimuth), 1= Y-axis (elevation/height/laser index), and 2= Z-axis (radius).

scaling_factor[]: Indicates a scale value for each axis applied in performng prediction applied to a slice.

interval_values []: Indicates an average interval value for each axis in performng prediction applied to a slice.

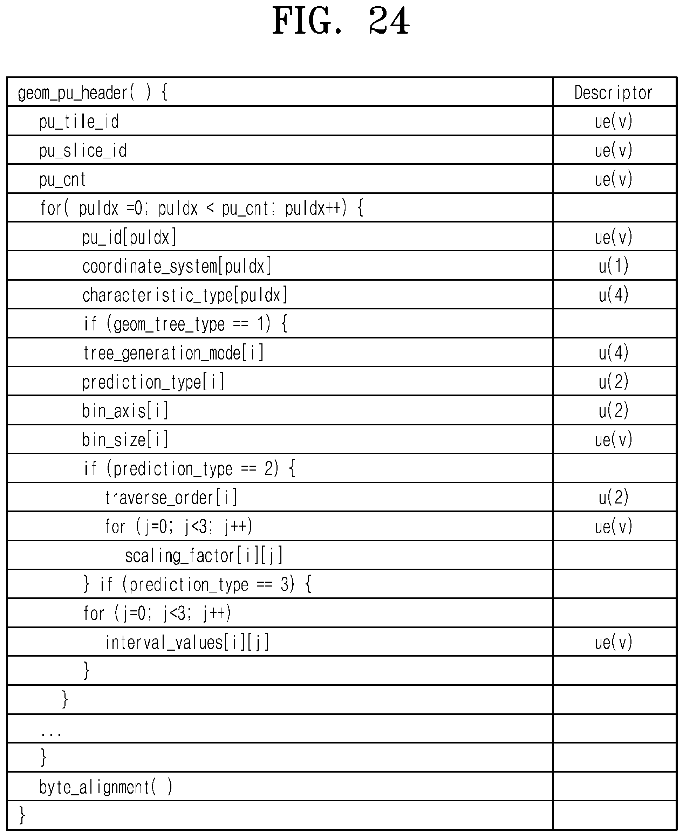

FIG. 24 shows a geometry PU header according to embodiments.

An encoding method according to embodiments may add geometry predictive tree coding option information for each PU to a geometry PU header (Geom PU Header). Information included in the geometry PU header efficiently supports prediction of geometry.

pu_tile_id: Indicates the tile ID to which a PU belongs.

pu_slice_id: Indicates the slice ID to which a PU belongs.

pu_cnt: Indicates the number of PUs included in a slice.

pu_id: Indicates the PU ID.

coordinate_system: Indicates a coordinate system applied to a slice. For example, the values thereof may indicate the followings: 0 = Cartesian coordinate system, and 1 = Spherical coordinate system.

characteristic_type: Indicates a characteristic for a frame. For example, the values thereof may indicate the followings: 0= mixture (road/static object/dynamic object), 1= road, 2= static object, and 3= dynamic object.

tree_generation_mode: Indicates a predictive tree generation method applied to a slice. A tree generation mode may be applied according to a coordinate system as follows. For example, the values thereof may indicate the followings: 0= x_based tree generation (azimuth_based tree generation), 1= y_based tree generation (height/elevation/laser index_based tree generation), and 2= z_based tree generation (radius_based tree generation).

prediction_type: Indicates a prediction method applied to a slice. For example, the values thereof may indicate the followings: 0= first method for road-object prediction, 1= second method for road-object prediction, 3= first method for object prediction, and 4= second method for object prediction.

bin_axis: Indicates a reference axis for grouping in generating a predictive tree applied to a slice. For example, the values thereof may indicate the followings: 0= X-axis, 1= Y-axis, and 2= Z-axis.

bin_size: Indicates a reference size for grouping in generating a predictive tree applied to a slice.

traverse_order: Indicates a predictive tree traverse order applied to a slice. According to a coordinate system, the traverse order may be applied as follows. For example, the values thereof may indicate the followings: 0= X-axis (azimuth), 1= Y-axis (elevation/height/laser index), and 2= Z-axis (radius).

scaling_factor[]: Indicates a scale value for each axis applied in performng prediction applied to a slice.

interval_values []: Indicates an average interval value for each axis in performng prediction applied to a slice.

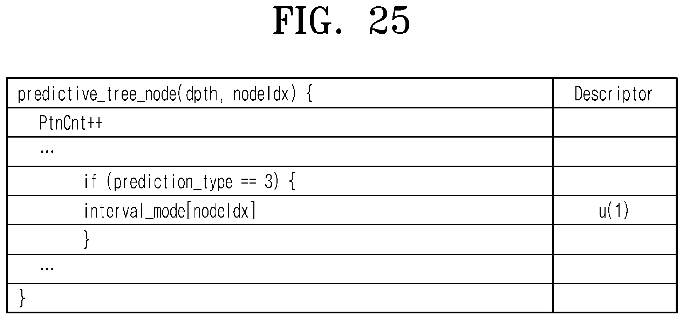

FIG. 25 shows a predictive tree node according to embodiments.

An encoding method according to embodiments may add information on Interval_mode is used to a predictive tree node. Information included in the predictive tree node efficiently supports prediction of geometry.

For example, when prediction_type is equal to 3, the predictive tree node includes an interval mode (interval_mode[nodeIdx]) according to a node index.

FIG. 26 illustrates a point cloud data encoding method according to embodiments.

The encoding method according to th embodiments may include encoding point cloud data (S2600).

The encoding method according to the embodiments may further include transmitting a bitstream containing the point cloud data (S2610).

Referring also to FIG. 18, regarding the geometry encoding, the encoding of the point cloud data may include encoding geometry data of the point cloud data, and encoding attribute data of the point cloud data, wherein the encoding of the geometry data may include generating a prediction unit from the point cloud data, generating a predictive tree based on the prediction unit, and performing prediction on the geometry data based on the predictive tree.

Referring also to FIG. 13, a type of the prediction unit may include at least one of a road, a static object, a dynamic object, or data having a mixture of the road, the static object, and the dynamic object.

Referring also to FIG. 14, regarding the road predictive tree generation, based on the type of the prediction unit being the road, a coordinate system for the prediction unit may be changed to a spherical coordinate system, wherein the predictive tree may be generated based on an azimuth of the point cloud data belonging to a laser index.

Referring also to FIG. 15, regarding the object predictive tree generation, based on the type of the prediction unit being the object, a coordinate system for the prediction unit may be changed to a spherical coordinate system. The predictive tree may be generated based on an azimuth of the point cloud data belonging to a laser index, or may be generated based on a laser index of the point cloud data belonging to an azimuth bin.

Referring to the object rotation of FIG. 16 and the object predictive tree generation of FIG. 17, based on the coordinate system for the prediction unit being a Cartesian coordinate system, the Cartesian coordinate system may be rotated based on an axis of a bounding box of the prediction unit, wherein the predictive tree may be generated based on an axis of the point cloud data belonging to a bin of a specific axis of the rotated coordinate system.

Regarding the first method for object prediction, a predicted value for current point cloud data may be generated based on the predictive tree. The predicted value may be generated based on at least one of a parent node or a parent node of the parent node within the predictive tree. The predicted value may be generated based on a bin of the point cloud data.

Regarding the second method for object prediction, based on the type of the prediction unit being the road, the predicted value may be generated from the parent node within the predictive tree based on an interval for the point cloud data.

Referring to the syntax of FIGS. 20 to 23, the encoding (S2600) may include generating a bitstream. The generated bitstream may contain at least one of information indicating a first prediction unit (LPU) generation type, information indicating a second prediction unit (PU) generation type, information indicating a tree-based second prediction unit generation type, coordinate system type information, frame characteristics information, predictive tree generation information, prediction method information, information indicating an axis of a bin, information indicating a size of the bin, information indicating a predictive tree traverse order, a scaling factor, or interval information.

The encoding method is performed by an encoding device. Referring to FIG. 1, the encoding device may include a memory, and at least one processor connected to the memory, wherein the at least one processor may be configured to encode point cloud data, and transmit a bitstream containing the point cloud data.

FIG. 27 illustrates a point cloud data decoding method according to embodiments.

The decoding method of FIG. 27 may follow the reverse process of the encoding method of FIG. 26.

The decoding method according to the embodiments may include receiving a bitstream containing point cloud data (S2700).

The decoding method according to the embodiments may further include the decoding point cloud data (S2710).

Referring also to FIGS. 11 and 12, regarding the road/object point cloud, the point cloud data includes a road and an object, wherein the road and the object are data captured by LiDAR.

Referring also to FIG. 19, regarding the geometry decoding, the decoding of the point cloud data (S2710) may include decoding geometry data of the point cloud data, and decoding attribute data of the point cloud data, wherein the decoding of the geometry data may include generating a prediction unit from the point cloud data, generating a predictive tree based on the prediction unit, and performing prediction on the geometry data based on the predictive tree.

Referring also to FIG. 13, regarding the LPU/PU types, a type of the prediction unit may include at least one of a road, a static object, a dynamic object, or data having a mixture of the road, the static object, and the dynamic object.

Referring also to FIG. 14, regarding the road predictive tree generation, based on the type of the prediction unit being the road, a coordinate system for the prediction unit may be changed to a spherical coordinate system, wherein the predictive tree may be generated based on an azimuth of the point cloud data belonging to a laser index.

Referring also to FIG. 15, regarding the object predictive tree generation, based on the type of the prediction unit being the object, a coordinate system for the prediction unit may be changed to a spherical coordinate system. The predictive tree may be generated based on an azimuth of the point cloud data belonging to a laser index, or may be generated based on a laser index of the point cloud data belonging to an azimuth bin.

Referring to the object rotation of FIG. 16 and the object predictive tree generation of FIG. 17, based on the coordinate system for the prediction unit being a Cartesian coordinate system, the Cartesian coordinate system may be rotated based on an axis of a bounding box of the prediction unit, wherein the predictive tree may be generated based on an axis of the point cloud data belonging to a bin of a specific axis of the rotated coordinate system.

Regarding the first method for object prediction, a predicted value for current point cloud data may be generated based on the predictive tree. The predicted value may be generated based on at least one of a parent node or a parent node of the parent node within the predictive tree. The predicted value may be generated based on a bin of the point cloud data.

Regarding the second method for object prediction, based on the type of the prediction unit being the road, the predicted value may be generated from the parent node within the predictive tree based on an interval for the point cloud data.

Referring to the syntax of FIGS. 20 to 23, the bitstream may contain at least one of information indicating a first prediction unit (LPU) generation type, information indicating a second prediction unit (PU) generation type, information indicating a tree-based second prediction unit generation type, coordinate system type information, frame characteristics information, predictive tree generation information, prediction method information, information indicating an axis of a bin, information indicating a size of the bin, information indicating a predictive tree traverse order, a scaling factor, or interval information.

The decoding method may be performed by the decoding device of FIG. 1. The decoding device may include a memory, and at least one processor connected to the memory, wherein the at least one processor may be configured to receive a bitstream containing point cloud data, and decode the point cloud data.

The PCC encoding method, PCC decoding method, and signaling method of the above-described embodiments may provide the following effects.

When a point cloud is captured with LiDAR equipment, a road and objects may be present in the content. For the road captured by LiDAR equipment, points may be generated in the shape of a circle centered on a center point, which is a position of a sensor. For the an object, unlike the road, points may form a clustering pattern. Therefore, in the captured point cloud, a pattern of points constituting a road and a pattern of points constituting objects may be different. There may be many objects in a large city. That is, an environment where there are more points corresponding to objects than points corresponding to a road may commonly exist. In addition, there may be a case where the importance of a road is low depending on a usecase. However, there may be clear limitations in a method of constructing a predictive tree and generating a predictor according to characteristics of a road.

Accordingly, embodiments may increase geometry compression efficiency by supporting a predictive tree coding method suitable for characteristics of each partitioned region based on a separated road and object to efficiently support geometry compression coding of content captured with LiDAR equipment.

Therefore, the transmission method/device according to embodiments may efficiently compress and transmit point cloud data, and deliver signaling information for the same, and the reception method/device according to embodiments may also efficiently decode/reconstruct point cloud data.

Operations of a transmission/reception device according to the above-described embodiments may be described in combination with a point cloud compression processing process.

The embodiments have been described in terms of a method and/or a device, and the description of the method and the description of the device may be applied complementary to each other.

Although the accompanying drawings have been described separately for simplicity, it is possible to design new embodiments by combining the embodiments illustrated in the respective drawings. Designing a recording medium readable by a computer on which programs for executing the above-described embodiments are recorded as needed by those skilled in the art also falls within the scope of the appended claims and their equivalents. The devices and methods according to embodiments may not be limited by the configurations and methods of the embodiments described above. Various modifications can be made to the embodiments by selectively combining all or some of the embodiments. Although preferred embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the devices of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the device according to the embodiments may include one or more processors capable of executing one or more programs. The one or more programs may perform any one or more of the operations/methods according to the embodiments or include instructions for performing the same. Executable instructions for performing the method/operations of the device according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In the present disclosure, "/" and "," should be interpreted as indicating "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C." Further, in this specification, the term "or" should be interpreted as indicating "and/or." For instance, the expression "A or B" may mean 1) only A, 2) only B, or 3) both A and B. In other words, the term "or" used in this document should be interpreted as indicating "additionally or alternatively."

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signals unless context clearly dictates otherwise.

The terms used to describe the embodiments are used for the purpose of describing specific embodiments, and are not intended to limit the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components. As used herein, conditional expressions such as "if" and "when" are not limited to an optional case and are intended to perform the related operation or interpret the related definition according to a specific condition when the specific condition is satisfied.

Operations according to the embodiments described in this specification may be performed by a transmission/reception device including a memory and/or a processor according to embodiments. The memory may store programs for processing/controlling the operations according to the embodiments, and the processor may control various operations described in this specification. The processor may be referred to as a controller or the like. In embodiments, operations may be performed by firmware, software, and/or combinations thereof. The firmware, software, and/or combinations thereof may be stored in the processor or the memory.

The operations according to the above-described embodiments may be performed by the transmission device and/or the reception device according to the embodiments. The transmission/reception device may include a transmitter/receiver configured to transmit and receive media data, a memory configured to store instructions (program code, algorithms, flowcharts and/or data) for the processes according to the embodiments, and a processor configured to control the operations of the transmission/reception device.

The processor may be referred to as a controller or the like, and may correspond to, for example, hardware, software, and/or a combination thereof. The operations according to the above-described embodiments may be performed by the processor. In addition, the processor may be implemented as an encoder/decoder for the operations of the above-described embodiments.

### [Mode for Disclosure]

As described above, related details have been described in the best mode for carrying out the embodiments.

### [Industrial Applicability]

As described above, the embodiments are fully or partially applicable to a point cloud data transmission/reception device and system.

Those skilled in the art may change or modify the embodiments in various ways within the scope of the embodiments.

Embodiments may include variations/modifications within the scope of the claims and their equivalents.

## Claims

1. A decoding method comprising:
receiving a bitstream containing point cloud data; and
decoding the point cloud data.

2. The decoding method of claim 1, wherein the point cloud data includes a road and an object,
wherein the road and the object are captured by LiDAR.

3. The decoding method of claim 1, wherein the decoding of the point cloud data comprises:
decoding geometry data of the point cloud data; and
decoding attribute data of the point cloud data,
wherein the decoding of the geometry data comprises:
generating a prediction unit from the point cloud data;
generating a predictive tree based on the prediction unit; and
performing prediction on the geometry data based on the predictive tree.

4. The decoding method of claim 3, wherein a type of the prediction unit comprises at least one of a road, a static object, a dynamic object, or data having a mixture of the road, the static object, and the dynamic object.

5. The decoding method of claim 3, wherein, based on the type of the prediction unit being the road, a coordinate system for the prediction unit is changed to a spherical coordinate system,
wherein the predictive tree is generated based on an azimuth of the point cloud data belonging to a laser index.

6. The decoding method of claim 3, wherein, based on the type of the prediction unit being the object, a coordinate system for the prediction unit is changed to a spherical coordinate system,
wherein:
the predictive tree is generated based on an azimuth of the point cloud data belonging to a laser index; or
the predictive tree is generated based on a laser index of the point cloud data belonging to an azimuth bin.

7. The decoding method of claim 6, wherein, based on the coordinate system for the prediction unit being a Cartesian coordinate system, the Cartesian coordinate system is rotated based on an axis of a bounding box of the prediction unit,
wherein the predictive tree is generated based on an axis of the point cloud data belonging to a bin of a specific axis of the rotated coordinate system.

8. The decoding method of claim 3, wherein a predicted value for current point cloud data is generated based on the predictive tree,
wherein the predicted value is generated based on at least one of a parent node or a parent node of the parent node within the predictive tree,
wherein the predicted value is generated based on a bin of the point cloud data.

9. The decoding method of claim 8, wherein, based on the type of the prediction unit being the road, the predicted value is generated from the parent node within the predictive tree based on an interval for the point cloud data.

10. The decoding method of claim 1, wherein the bitstream contains at least one of:
information indicating a first prediction unit generation type;
information indicating a second prediction unit generation type;
information indicating a tree-based second prediction unit generation type;
coordinate system type information;
frame characteristics information;
predictive tree generation information;
prediction method information;
information indicating an axis of a bin;
information indicating a size of the bin;
information indicating a predictive tree traverse order;
a scaling factor; or
interval information.

11. A decoding device comprising:
a memory; and
at least one processor connected to the memory,
wherein the at least one processor is configured to:
receive a bitstream containing point cloud data; and
decode the point cloud data.

12. An encoding method comprising:
encoding point cloud data; and
transmitting a bitstream containing the point cloud data.

13. The encoding method of claim 12, wherein the encoding of the point cloud data comprises:
encoding geometry data of the point cloud data; and
encoding attribute data of the point cloud data,
wherein the encoding of the geometry data comprises:
generating a prediction unit from the point cloud data;
generating a predictive tree based on the prediction unit; and
performing prediction on the geometry data based on the predictive tree.

14. The encoding method of claim 13, wherein a type of the prediction unit comprises at least one of a road, a static object, a dynamic object, or data having a mixture of the road, the static object, and the dynamic object.

15. An encoding device comprising:
a memory; and
at least one processor connected to the memory,
wherein the at least one processor is configured to:
encode point cloud data; and
transmit a bitstream containing the point cloud data.
